# EUROPEAN PATENT APPLICATION

(11) **EP 3 767 954 A1**
(43) Date of publication of application: **20.01.2021**
(21) Application number: 19785991.1
(22) Date of filing: 28.03.2019
(51) Int. Cl.: H04N 19/70, H04N 19/115, H04N 19/136, H04N 19/167, H04N 19/176, H04N 19/597, H04N 19/85

(54) **IMAGE PROCESSING DEVICE AND METHOD**

(30) Priority: 11.04.2018 JP 2018076227
(71) Applicant: Sony Corporation, 108-0075 Tokyo (JP)
(72) Inventor: YANO Koji, Tokyo 108-0075 (JP); KATO Tsuyoshi, Tokyo 108-0075 (JP); KUMA Satoru, Tokyo 108-0075 (JP); NAKAGAMI Ohji, Tokyo 108-0075 (JP)
(74) Representative: D Young & Co LLP
(86) International application number: PCT/JP2019/013537
(87) International publication number: WO 2019/198523

(57) **Abstract**

The present disclosure relates to an image processing apparatus and method that allow suppression of image-quality deterioration.

A plurality of maps indicating whether or not there is data at each position on one frame image having arranged a patch that is an image obtained by projecting 3D data representing a three-dimensional structure onto a two-dimensional plane is generated, and a bitstream including encoded data of the frame image and encoded data of a plurality of the generated maps is generated. The present disclosure can be applied to an information processing apparatus, an image processing apparatus, an electronic device, an information processing method, a program or the like, for example.

## Description

### [Technical Field]

The present disclosure relates to an image processing apparatus and method, and in particular, relates to an image processing apparatus and method that allow suppression of image-quality deterioration.

### [Background Art]

In the past, as a method of encoding 3D data representing a three-dimensional structure like a point cloud (Point cloud), for example, there has been encoding using voxel (Voxel) like an octree or the like, for example (see NPL 1, for example).

In recent years, as another encoding method, for example, an approach (hereinafter, also called a video-based approach (Video-based approach)) has been proposed to project each of positional information and color information of a point cloud onto a two-dimensional plane for each small region and to encode the projected information by a two-dimensional-image encoding method.

In such encoding, for the positional information projected onto the two-dimensional plane, an occupancy map (OccupancyMap) for determining whether or not there is positional information is defined in the unit of a fixed-sized block NxN and is described in a bitstream (Bitstream). At that time, the value of N is also described in the bitstream with the name of occupancy precision (OccupancyPrecision).

### [Citation List]

### [Non Patent Literature]

### [NPL 1]

R. Mekuria, Student Member IEEE, K. Blom, P. Cesar., Member, IEEE, "Design, Implementation and Evaluation of a Point Cloud Codec for Tele-Immersive Video," tcsvt_paper_submitted_february.pdf

### [Summary]

### [Technical Problems]

However, in the existing method, the occupancy precision N is fixed over all the target regions of an occupancy map. Accordingly, there has been a trade-off that, if it is determined whether or not there is data in a small block unit in the occupancy map, PointCloud data of higher resolution can be represented, but this inevitably increases the bit rate. Accordingly, actually, there has been a fear that the image quality of a decoded image deteriorates due to the determination precision (occupancy precision N) of the occupancy map in terms of whether or not there is data.

The present disclosure has been made in view of such circumstances and is to allow suppression of image-quality deterioration.

### [Solution to Problems]

An image processing apparatus according to one aspect of the present technology is an image processing apparatus including a map generating section that generates a plurality of maps indicating whether or not there is data at each position on one frame image having arranged a patch that is an image obtained by projecting 3D data representing a three-dimensional structure onto a two-dimensional plane, and a bitstream generating section that generates a bitstream including encoded data of the frame image and encoded data of a plurality of the maps generated by the map generating section.

An image processing method according to one aspect of the present technology is an image processing method including generating a plurality of maps indicating whether or not there is data at each position on one frame image having arranged a patch that is an image obtained by projecting 3D data representing a three-dimensional structure onto a two-dimensional plane, and generating a bitstream including encoded data of the frame image and encoded data of a plurality of the generated maps.

An image processing apparatus according to another aspect of the present technology is an image processing apparatus including a reconstructing section that uses a plurality of maps that corresponds to a frame image having arranged a patch that is an image obtained by projecting 3D data representing a three-dimensional structure onto a two-dimensional plane and indicates whether or not there is data at each position, to reconstruct the 3D data from the patch.

An image processing method according to another aspect of the present technology is an image processing method including using a plurality of maps that corresponds to a frame image having arranged a patch that is an image obtained by projecting 3D data representing a three-dimensional structure onto a two-dimensional plane and indicates whether or not there is data at each position, to reconstruct the 3D data from the patch.

An image processing apparatus according to still another aspect of the present technology is an image processing apparatus including a map generating section that generates a map that indicates whether or not there is data at each position on a frame image having arranged a patch that is an image obtained by projecting 3D data representing a three-dimensional structure onto a two-dimensional plane and has a plurality of levels of precision set in terms of whether or not there is data, and a bitstream generating section that generates a bitstream including encoded data of the frame image and encoded data of the map generated by the map generating section.

An image processing method according to still another aspect of the present technology is an image processing method including generating a map that indicates whether or not there is data at each position on a frame image having arranged a patch that is an image obtained by projecting 3D data representing a three-dimensional structure onto a two-dimensional plane and has a plurality of levels of precision set in terms of whether or not there is data, and generating a bitstream including encoded data of the frame image and encoded data of the generated map.

An image processing apparatus according to yet another aspect of the present technology is an image processing apparatus including a reconstructing section that uses a map that indicates whether or not there is data at each position on a frame image having arranged a patch that is an image obtained by projecting 3D data representing a three-dimensional structure onto a two-dimensional plane and has a plurality of levels of precision set in terms of whether or not there is data, to reconstruct the 3D data from the patch.

An image processing method according to yet another aspect of the present technology is an image processing method including using a map that indicates whether or not there is data at each position on a frame image having arranged a patch that is an image obtained by projecting 3D data representing a three-dimensional structure onto a two-dimensional plane and has a plurality of levels of precision set in terms of whether or not there is data, to reconstruct the 3D data from the patch.

In the image processing apparatus and method according to the one aspect of the present technology, a plurality of maps indicating whether or not there is data at each position on one frame image having arranged a patch that is an image obtained by projecting 3D data representing a three-dimensional structure onto a two-dimensional plane is generated, and a bitstream including encoded data of the frame image and encoded data of a plurality of the generated maps is generated.

In the image processing apparatus and method according to the other aspect of the present technology, a plurality of maps that corresponds to a frame image having arranged a patch that is an image obtained by projecting 3D data representing a three-dimensional structure onto a two-dimensional plane and indicates whether or not there is data at each position is used to reconstruct the 3D data from the patch.

In the image processing apparatus and method according to the still other aspect of the present technology, a map that indicates whether or not there is data at each position on a frame image having arranged a patch that is an image obtained by projecting 3D data representing a three-dimensional structure onto a two-dimensional plane and has a plurality of levels of precision set in terms of whether or not there is data is generated, and a bitstream including encoded data of the frame image and encoded data of the generated map is generated.

In the image processing apparatus and method according to the yet other aspect of the present technology, a map that indicates whether or not there is data at each position on a frame image having arranged a patch that is an image obtained by projecting 3D data representing a three-dimensional structure onto a two-dimensional plane and has a plurality of levels of precision set in terms of whether or not there is data is used to reconstruct the 3D data from the patch.

### [Advantageous Effect of Invention]

According to the present disclosure, images can be processed. In particular, image-quality deterioration can be suppressed.

### [Brief Description of Drawings]

[FIG. 1]

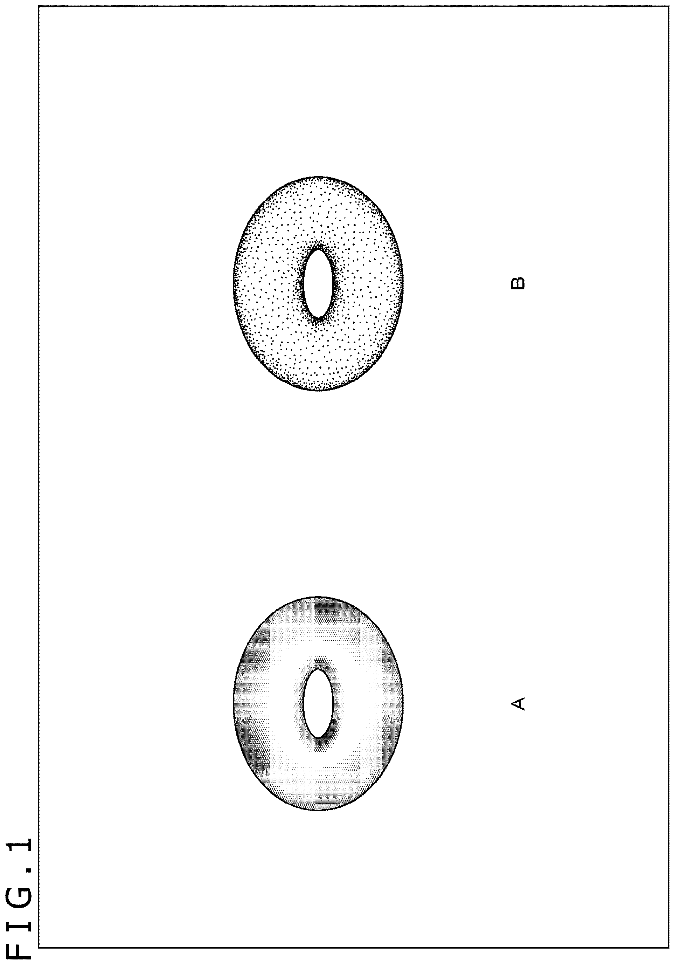

   FIG. 1 is a figure for explaining an example of a point cloud.
[FIG. 2]

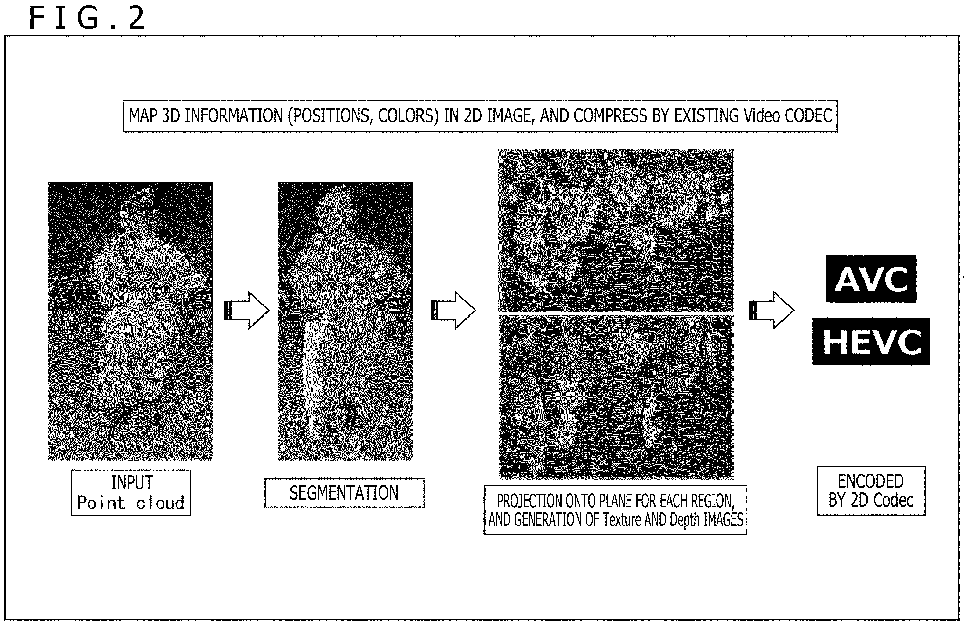

   FIG. 2 is a figure for explaining an example of an overview of a video-based approach.
[FIG. 3]

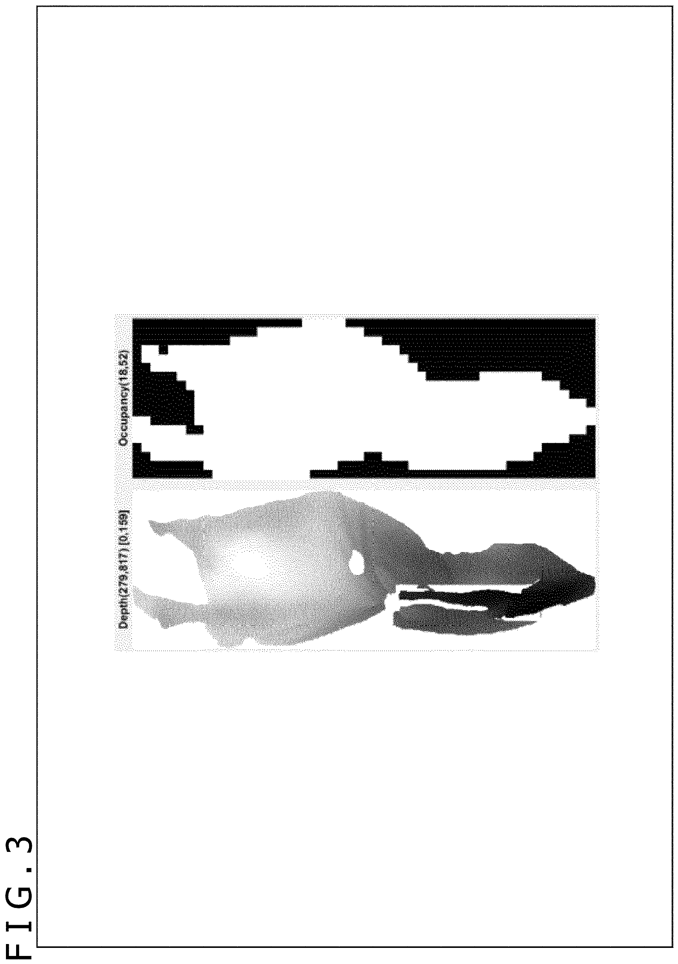

   FIG. 3 is a figure illustrating an example of a geometry image and an occupancy map.
[FIG. 4]

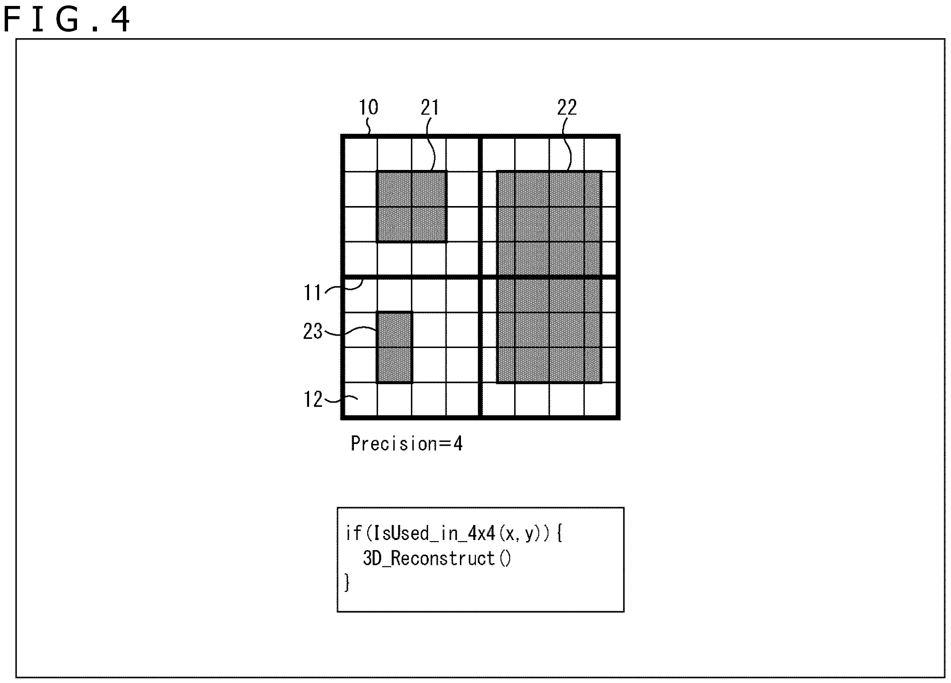

   FIG. 4 is a figure for explaining an example of precision of an occupancy map.
[FIG. 5]

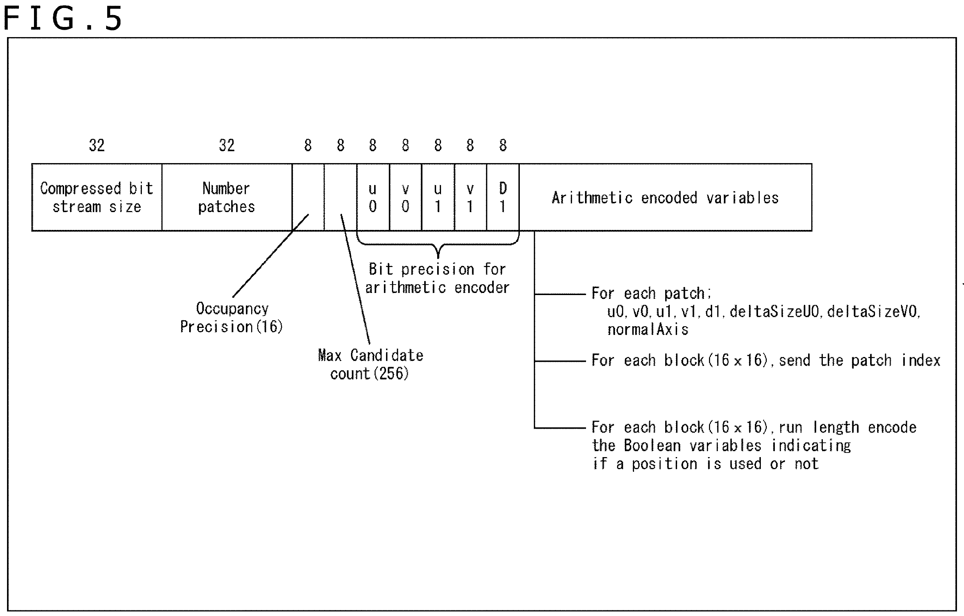

   FIG. 5 is a figure for explaining an example of a data structure of an occupancy map.
[FIG. 6]

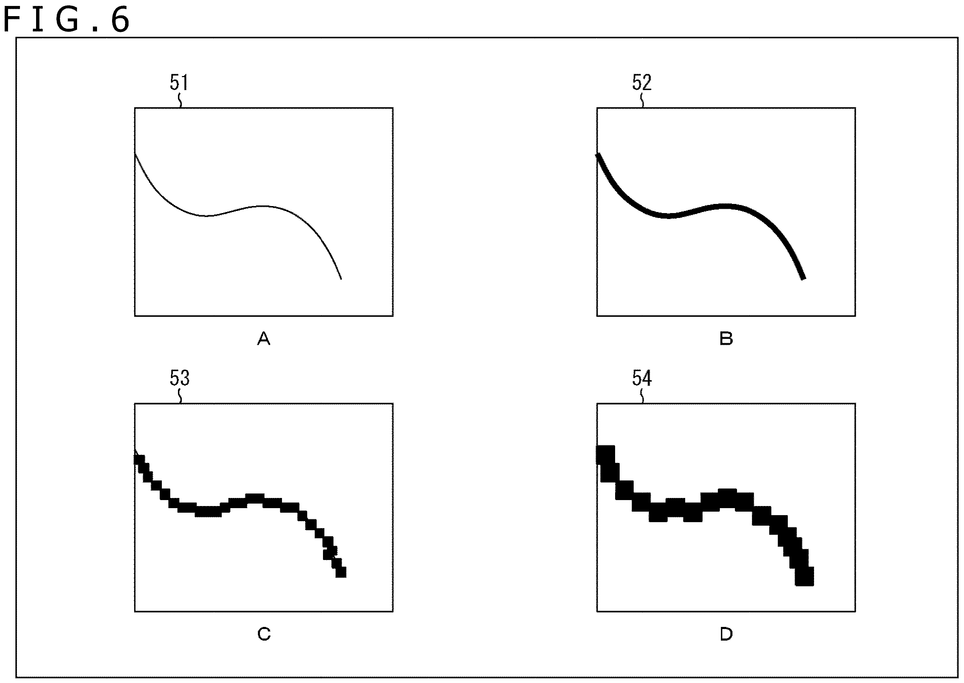

   FIG. 6 is a figure for explaining an example of image-quality deterioration due to precision of an occupancy map.
[FIG. 7]

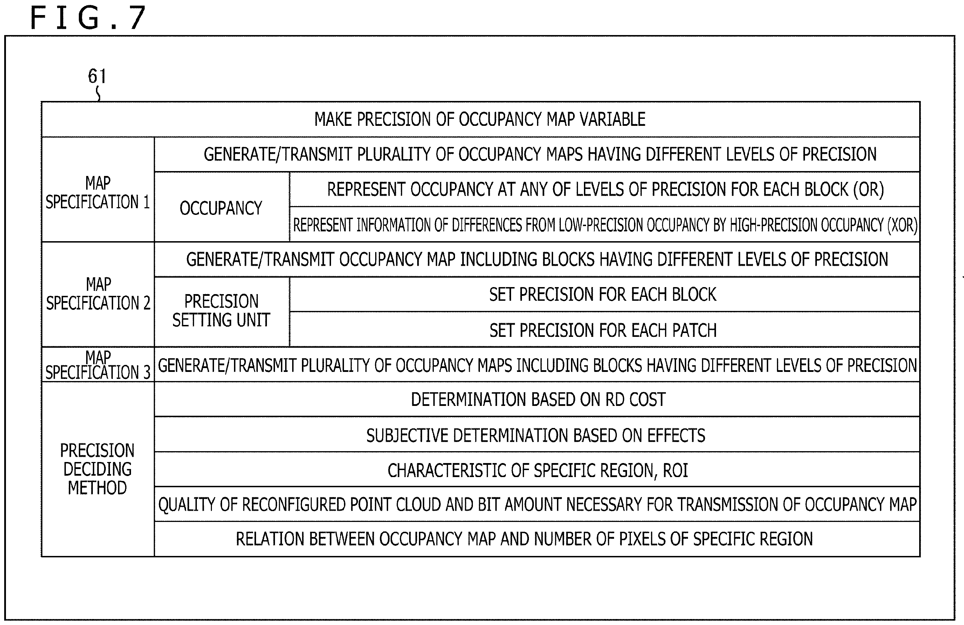

   FIG. 7 is a figure summarizing main features of the present technology.
[FIG. 8]

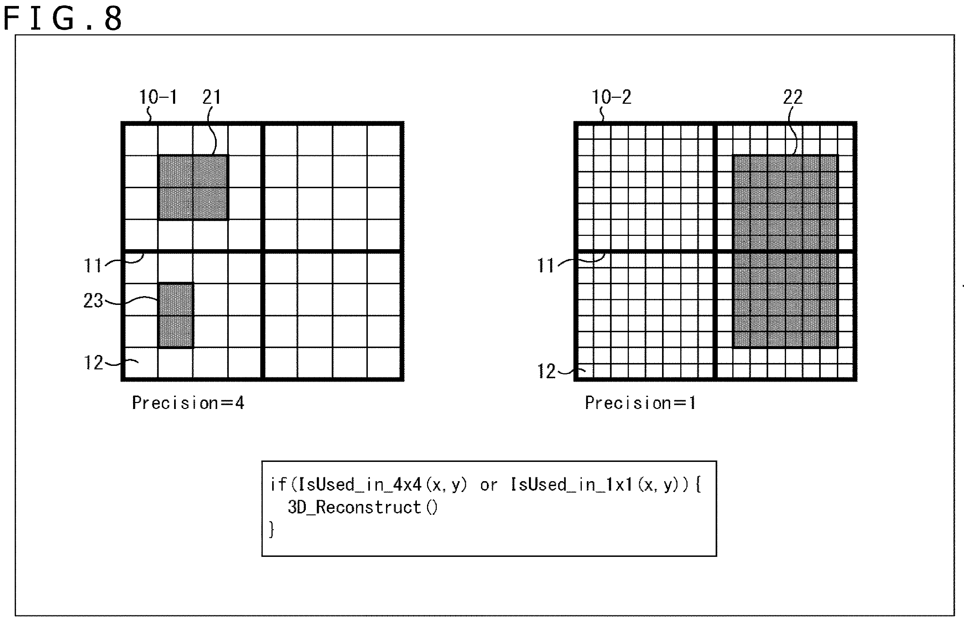

   FIG. 8 is a figure for explaining an example of an occupancy map.
[FIG. 9]

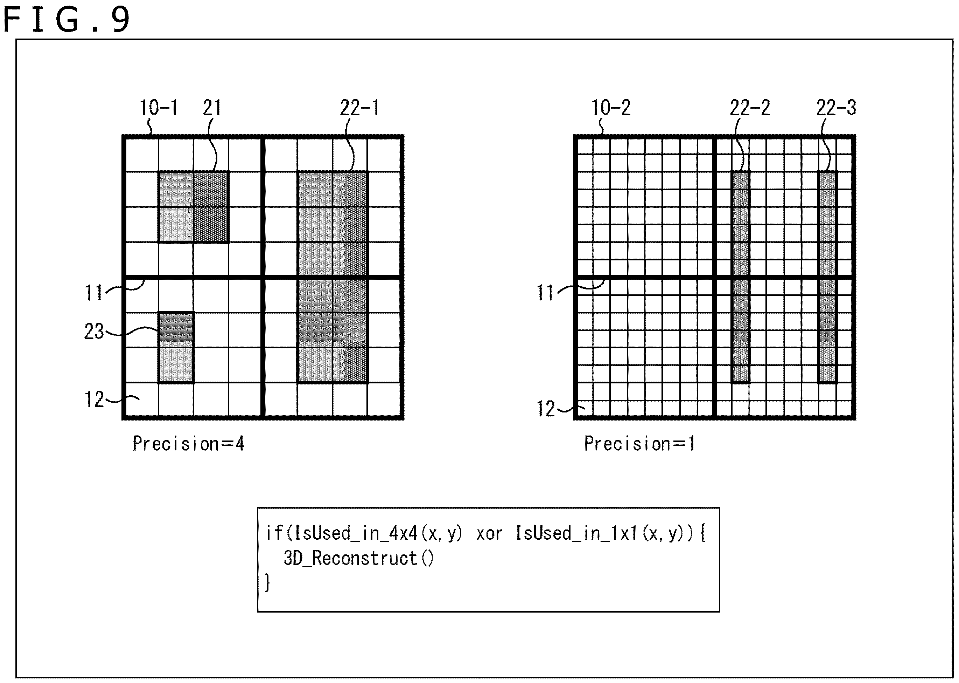

   FIG. 9 is a figure for explaining an example of an occupancy map.
[FIG. 10]

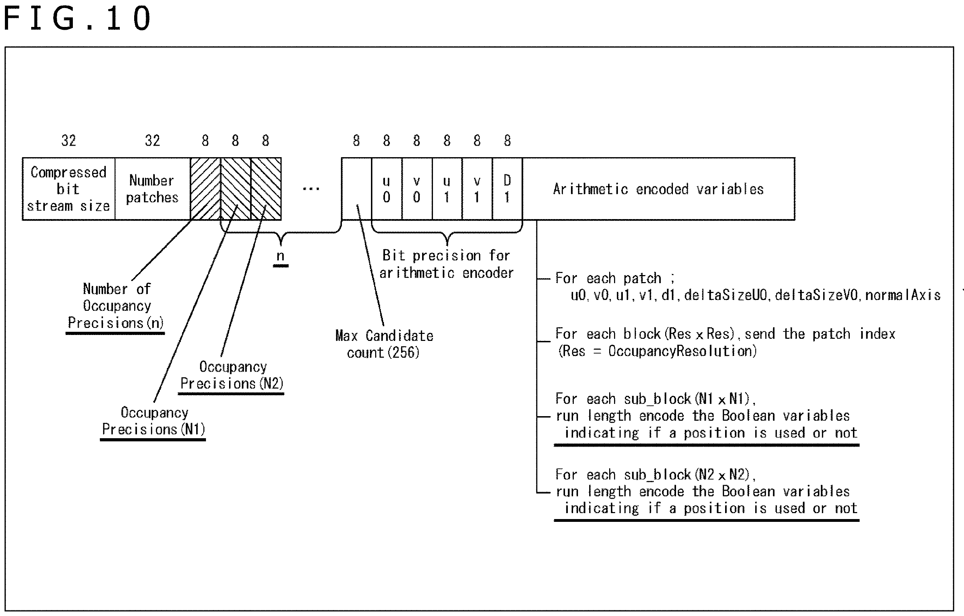

   FIG. 10 is a figure for explaining an example of a data structure of an occupancy map.
[FIG. 11]

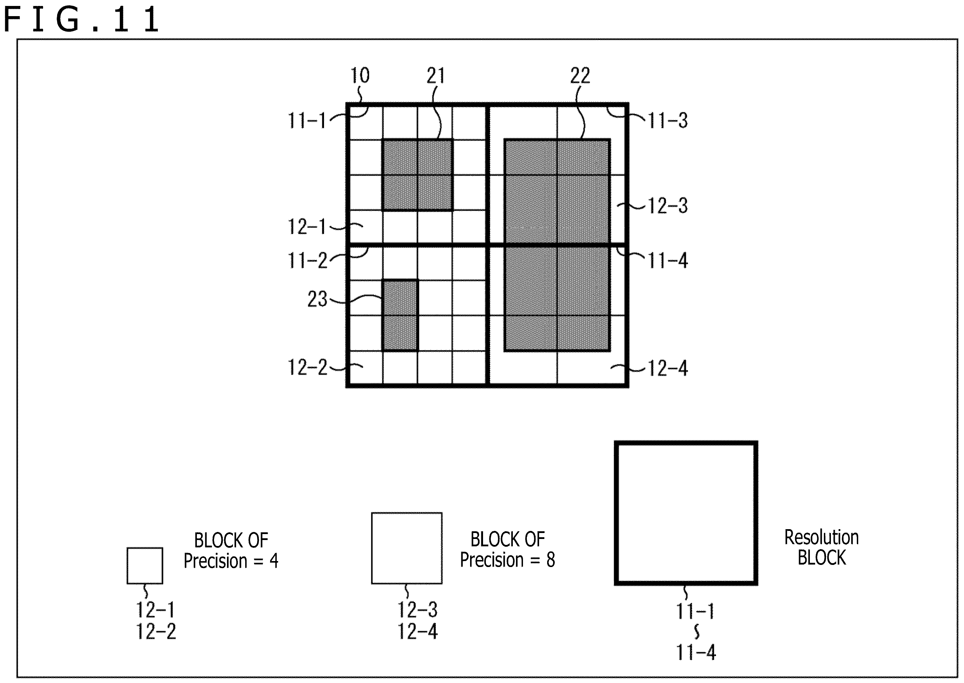

   FIG. 11 is a figure for explaining an example of an occupancy map.
[FIG. 12]

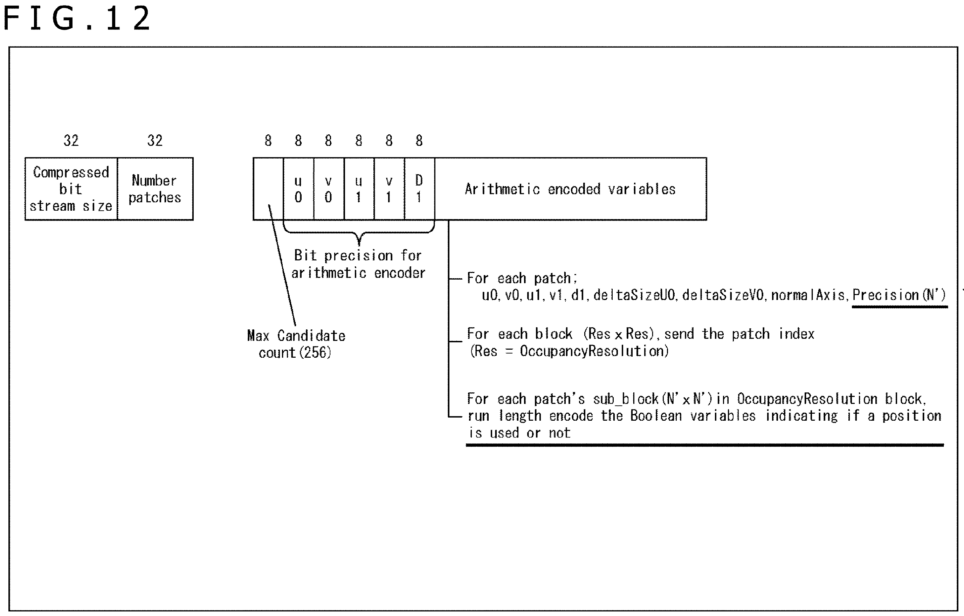

   FIG. 12 is a figure for explaining an example of a data structure of an occupancy map.
[FIG. 13]

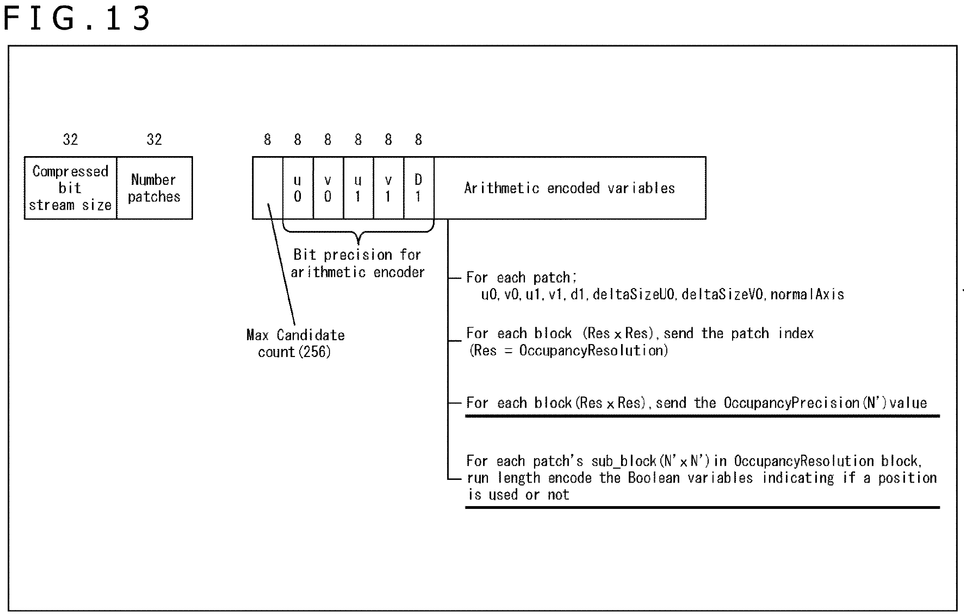

   FIG. 13 is a figure for explaining an example of a data structure of an occupancy map.
[FIG. 14]

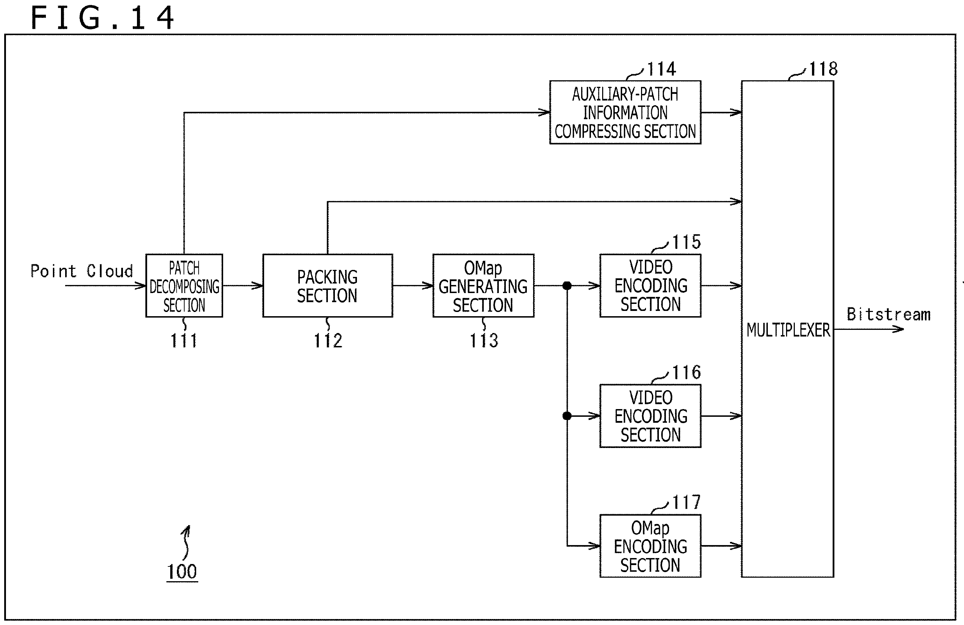

   FIG. 14 is a block diagram illustrating a main configuration example of an encoding apparatus.
[FIG. 15]

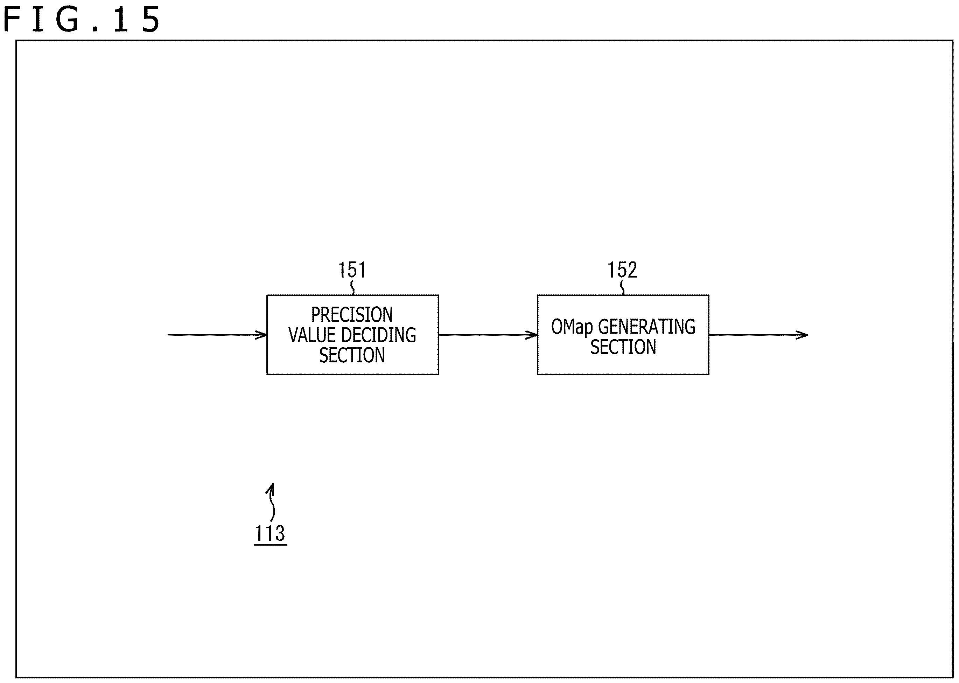

   FIG. 15 is a figure for explaining a main configuration example of an OMap generating section.
[FIG. 16]

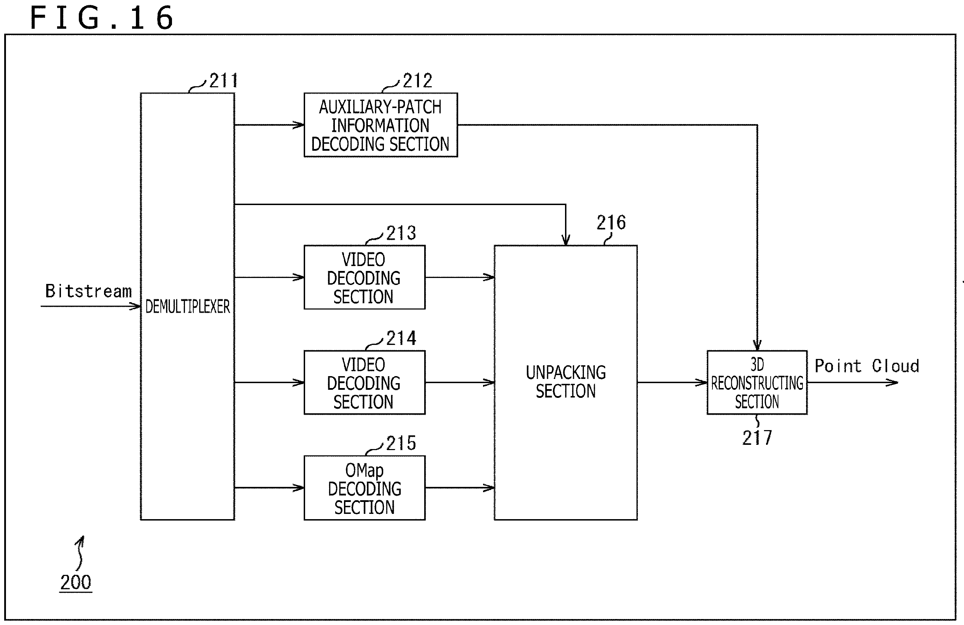

   FIG. 16 is a block diagram illustrating a main configuration example of a decoding apparatus.
[FIG. 17]

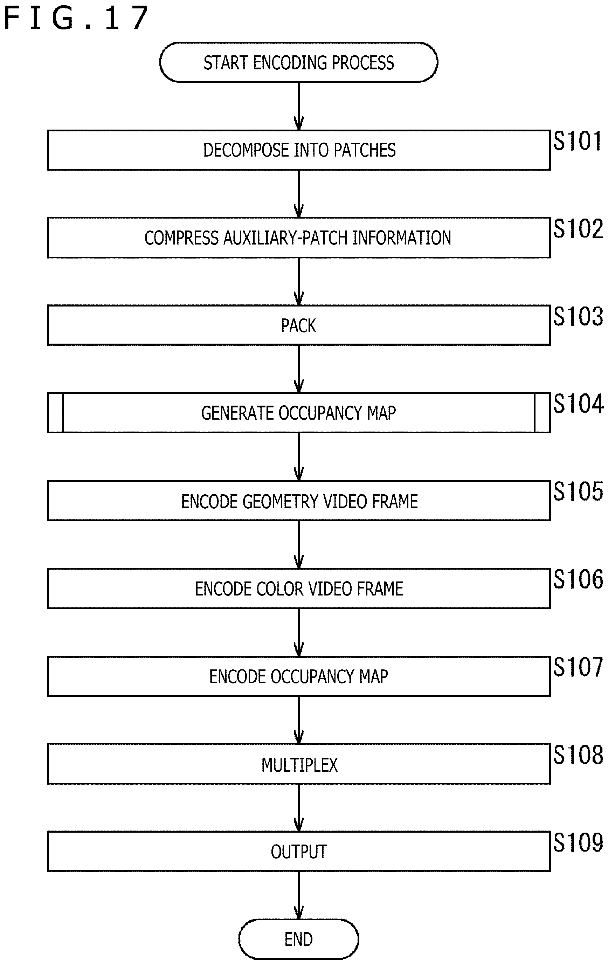

   FIG. 17 is a flowchart for explaining an example of a flow of an encoding process.
[FIG. 18]

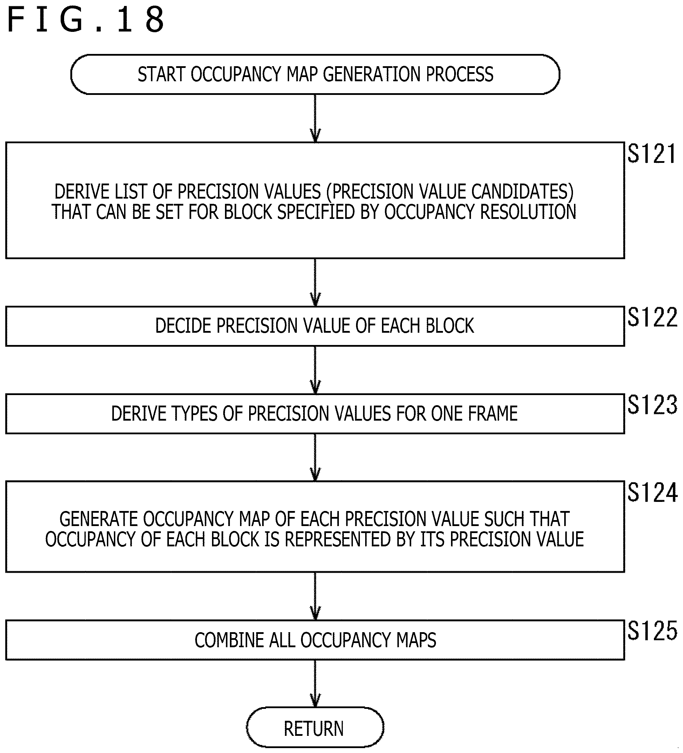

   FIG. 18 is a flowchart for explaining an example of a flow of an occupancy map generation process.
[FIG. 19]

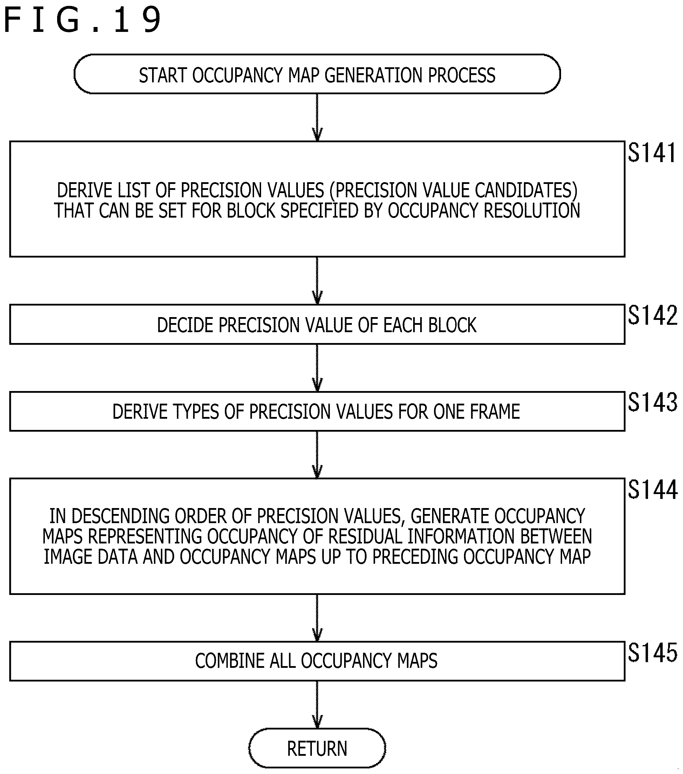

   FIG. 19 is a flowchart for explaining an example of a flow of the occupancy map generation process.
[FIG. 20]

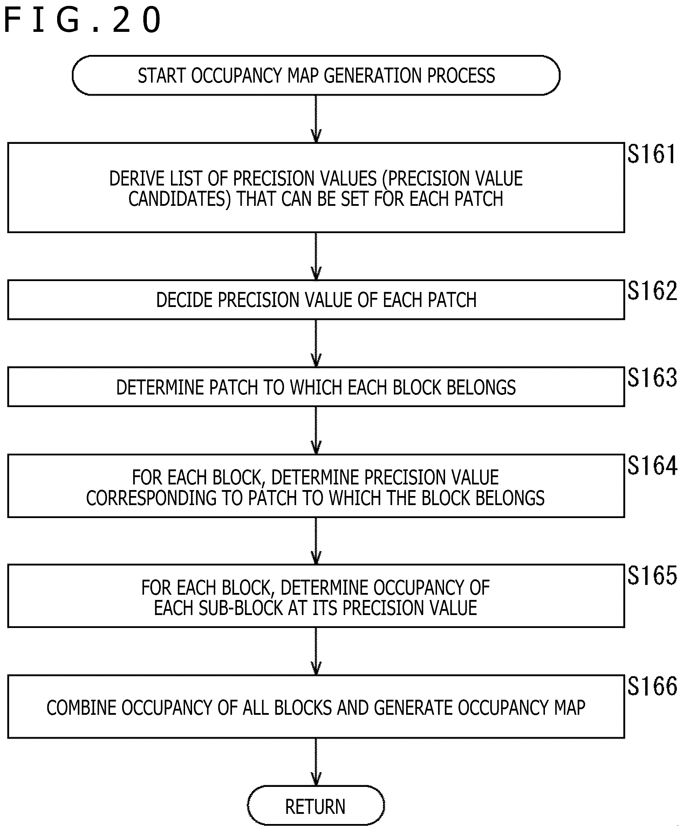

   FIG. 20 is a flowchart for explaining an example of a flow of the occupancy map generation process.
[FIG. 21]

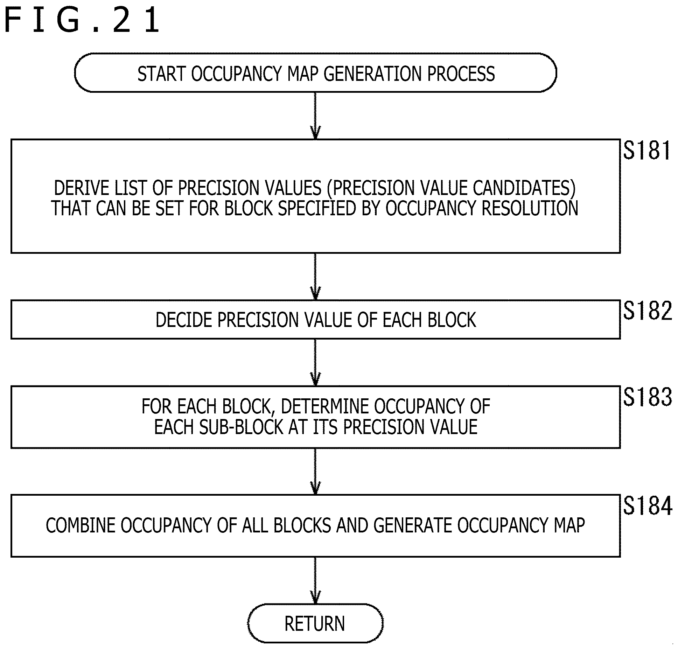

   FIG. 21 is a flowchart for explaining an example of a flow of the occupancy map generation process.
[FIG. 22]

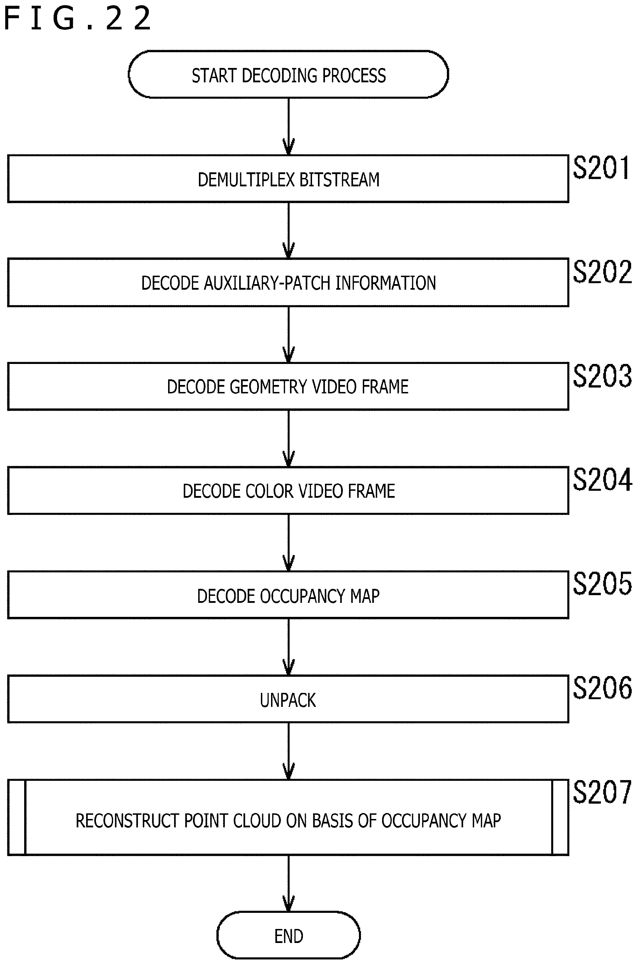

   FIG. 22 is a flowchart for explaining an example of a flow of a decoding process.
[FIG. 23]

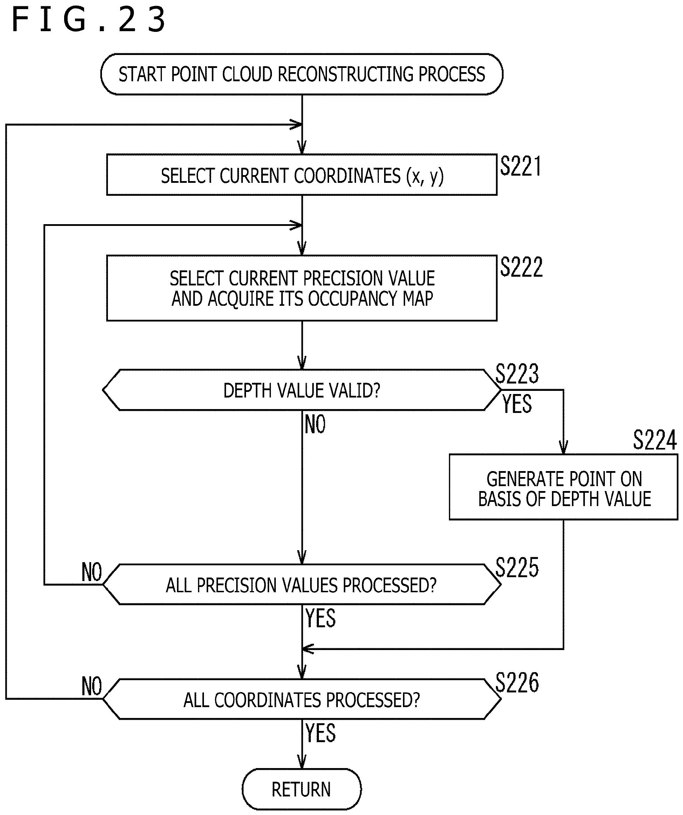

   FIG. 23 is a flowchart for explaining an example of a flow of a point cloud reconstructing process.
[FIG. 24]

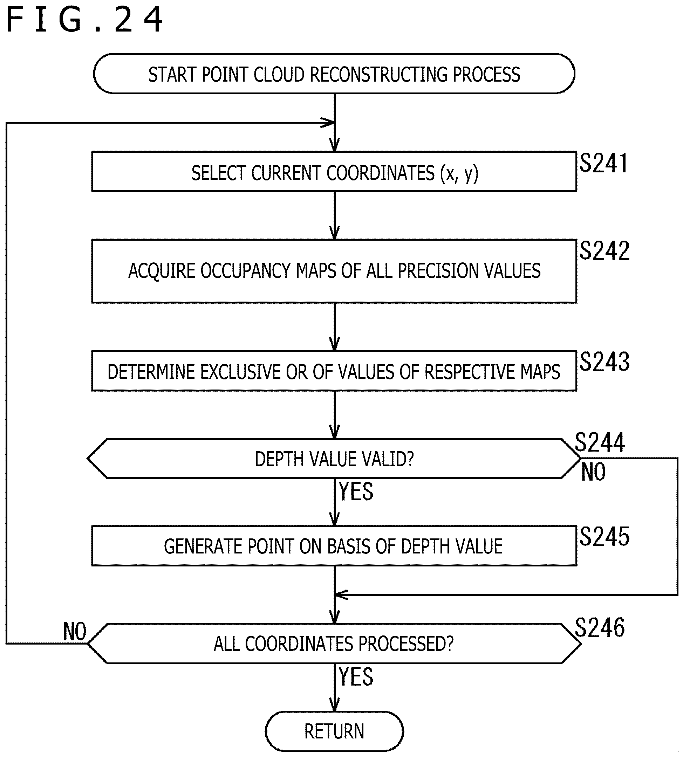

   FIG. 24 is a flowchart for explaining an example of a flow of the point cloud reconstructing process.
[FIG. 25]

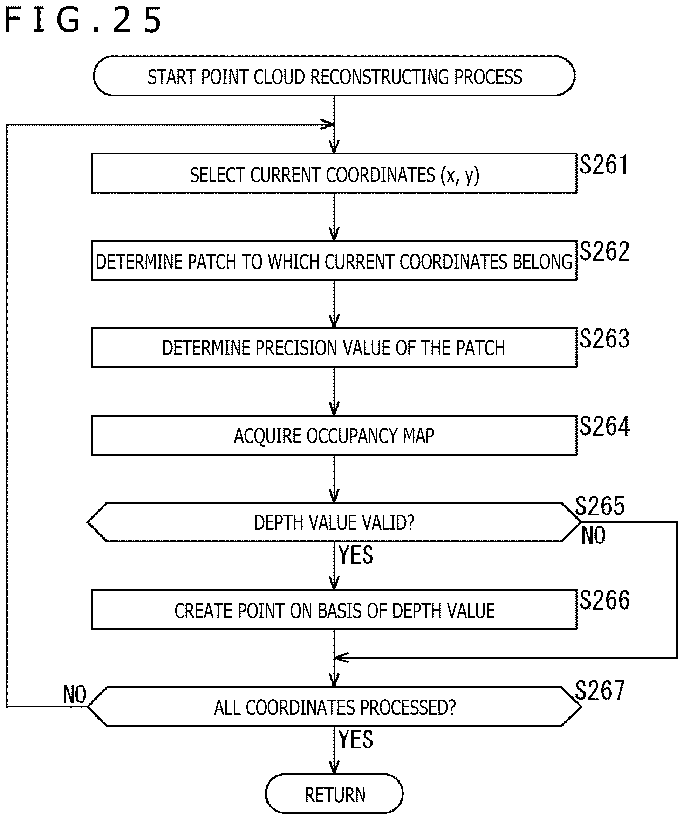

   FIG. 25 is a flowchart for explaining an example of a flow of the point cloud reconstructing process.
[FIG. 26]

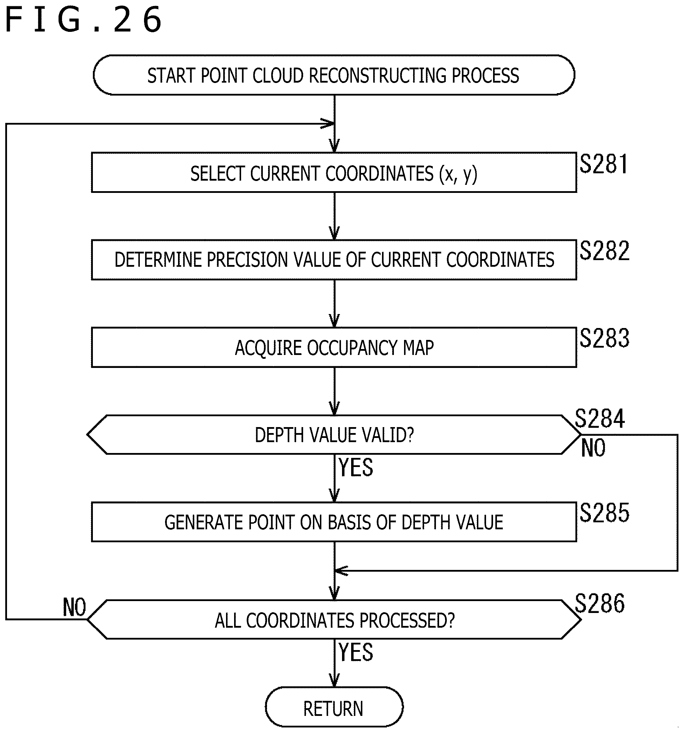

   FIG. 26 is a flowchart for explaining an example of a flow of the point cloud reconstructing process.
[FIG. 27]

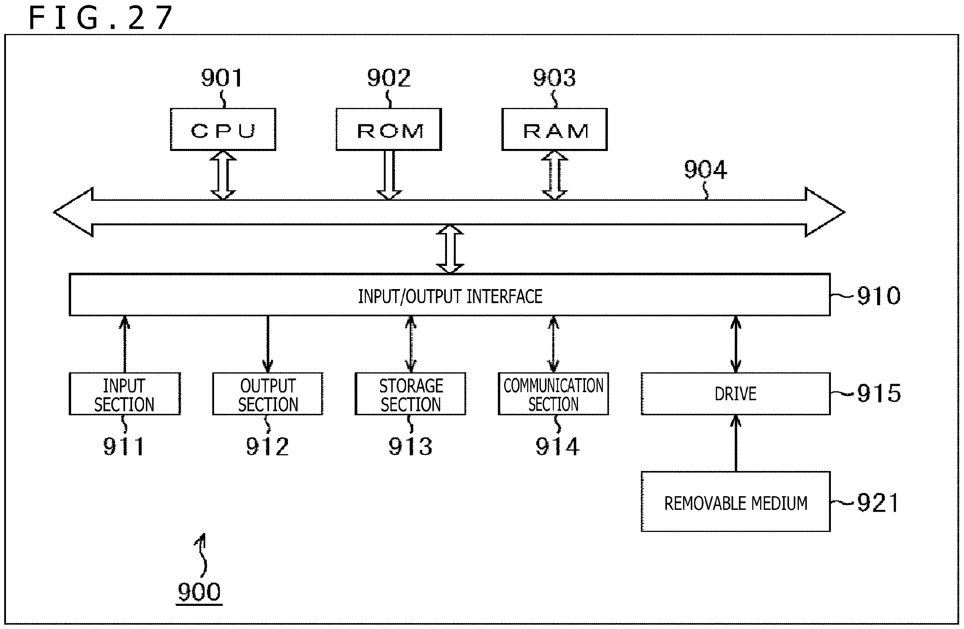

   FIG. 27 is a block diagram illustrating a main configuration example of a computer.

### [Description of Embodiment]

Hereinafter, a mode for carrying out the present disclosure (hereinafter called an embodiment) is explained. Note that the explanation is given in the following order.
1. Video-Based Approach
2. First Embodiment (Control of Precision of Occupancy Map)
3. Notes

### <1. Video-Based Approach>

### <Documents Etc. Supporting Technical Contents/Technical Terms>

The scope of disclosure of the present technology includes not only contents described in embodiments, but also contents described in the following pieces of NPL that had been known at the time of the application of the present specification.

NPL 1: (mentioned above)
NPL 2: TELECOMMUNICATION STANDARDIZATION SECTOR OF ITU (International Telecommunication Union), "Advanced video coding for generic audiovisual services," H.264, 04/2017
NPL 3: TELECOMMUNICATION STANDARDIZATION SECTOR OF ITU (International Telecommunication Union), "High efficiency video coding," H.265, 12/2016
NPL 4: Jianle Chen, Elena Alshina, Gary J. Sullivan, Jens-Rainer, Jill Boyce, "Algorithm Description of Joint Exploration Test Model 4," JVET-G1001_v1, Joint Video Exploration Team (JVET) of ITU-T SG 16 WP 3 and ISO/IEC JTC 1/SC 29/WG 11 7th Meeting: Torino, IT, 13-21 July 2017

That is, the contents described in the pieces of NPL mentioned above can also be the basis for making a determination regarding support requirements. For example, even in a case that embodiments lack direct descriptions of Quad-Tree Block Structure described in NPL 3 and QTBT (Quad Tree Plus Binary Tree) Block Structure described in NPL 4, it is deemed that they are within the scope of disclosure of the present technology, and the support requirements of claims are satisfied. In addition, for example, similarly, even in a case that embodiments lack direct descriptions of technical terms such as parsing (Parsing), syntax (Syntax), or semantics (Semantics), it is deemed that they are within the scope of disclosure of the present technology, and the support requirement of claims is satisfied.

### <Point Clouds>

In the past, there have been pieces of data such as point clouds that represent a three-dimensional structure by positional information, attribute information and the like of the point clouds, or meshes that include vertexes, edges, and planes and define a three-dimensional shape by using a polygonal representation.

For example, in a case of point clouds, a three-dimensional structure like the one illustrated in A in FIG. 1 is represented as a set of many points (point cloud) like the one illustrated in B in FIG. 1. That is, the data of a point cloud includes positional information and attribute information (e.g., color, etc.) of each point in this point cloud. Accordingly, the data structure is relatively simple, and can additionally represent any three-dimensional structure at sufficient precision by using a sufficiently large number of points.

### <Overview of Video-Based Approach>

A video-based approach (Video-based approach) has been proposed to project each of positional information and color information of such a point cloud onto a two-dimensional plane for each small region and to encode the projected information by a two-dimensional-image encoding method.

In this video-based approach, as illustrated in FIG. 2, for example, an input point cloud (Point cloud) is partitioned into a plurality of segments (also called regions), and each of the regions is projected onto a two-dimensional plane. Note that data for each position of a point cloud (i.e., data of each point) includes positional information (Geometry (also called Depth)) and attribute information (Texture) as mentioned above, and each of the positional information and the attribute information of each region is projected onto a two-dimensional plane.

Then, each segment (also called a patch) projected onto the two-dimensional plane is arranged in a two-dimensional image and is encoded by a two-dimensional-plane-image encoding scheme like AVC (Advanced Video Coding), HEVC (High Efficiency Video Coding) or the like, for example.

### <Occupancy Map>

In a case that 3D data is projected onto a two-dimensional plane by the video-based approach, other than a two-dimensional-plane image (also called a geometry (Geometry) image) obtained by projection of positional information and a two-dimensional-plane image (also called a texture (Texture) image) obtained by projection of attribute information as mentioned above, an occupancy map like the one illustrated in FIG. 3 is generated. The occupancy map is map information indicating whether or not there is positional information and attribute information at each position on a two-dimensional plane. In the example illustrated in FIG. 3, a geometry image (Depth) and an occupancy map (Occupancy) (of patches) for mutually corresponding positions are placed next to each other. In the case of the example illustrated in FIG. 3, the white portion of the occupancy map (the left side in the figure) indicates positions (coordinates) on the geometry image where there is data (i.e., positional information), and black portions indicate positions (coordinates) on the geometry image where there is no data (i.e., positional information).

FIG. 4 is a figure illustrating a configuration example of the occupancy map. As illustrated in FIG. 4, an occupancy map 10 includes blocks 11 (bold-line frames) called Resolution. In FIG. 4, the reference character is given only to one block 11, but the occupancy map 10 includes 2×2, four blocks 11. Each block 11 (Resolution) includes sub-blocks 12 (thin-line frames) called Precision. In the case of the example illustrated in FIG. 4, each block 11 includes 4×4 sub-blocks 12.

In a range, of a frame image, corresponding to the occupancy map 10, patches 21 to 23 are arranged. In the occupancy map 10, it is determined for each sub-block 12 whether or not there is data of the patches.

FIG. 5 illustrates an example of the data structure of an occupancy map. The occupancy map includes data like the one illustrated in FIG. 5.

For example, in Arithmetic encoded variables, coordinate information (u0, v0, u1, v1) indicating the range regarding each patch is stored. That is, in the occupancy map, the range of the region of each patch is indicated by the coordinates ((u0, v0) and (u1, v1)) of opposite vertices of the region.

In this occupancy map (OccupancyMap), in the unit of a predetermined fixed-sized block NxN, it is determined whether or not there is positional information (and attribute information). As illustrated in FIG. 5, the value of N is also described in the bitstream with the name of occupancy precision (OccupancyPrecision).

### <Deterioration of Resolution due to Occupancy Map>

However, in the existing method, the occupancy precision N (also called a precision value) has been fixed over all the target regions of an occupancy map. Accordingly, there has been a trade-off that, if it is determined whether or not there is data in a small block unit in the occupancy map, point cloud data of higher resolution can be represented, but this inevitably increases the bit rate. Accordingly, actually, there has been a fear that the resolution of portions with small patterns deteriorates due to the determination precision (occupancy precision N) of the occupancy map in terms of whether or not there is data, and the image quality of a decoded image deteriorates.

For example, a piece of hair with the shape of a thin line is included in an image 51 illustrated in A in FIG. 6, but there has been a fear that this inevitably becomes thick as illustrated in an image 52 in B in FIG. 6 due to an occupancy map with the precision value "1" (precision = 1), for example; there has been a fear that this inevitably becomes thicker as illustrated in an image 53 in C in FIG. 6 in a case that the occupancy-map precision value is "2" (precision = 2); there has been a fear that this inevitably becomes thicker, and the line is represented by blocks as illustrated in an image 54 in D in FIG. 6 in a case that the occupancy-map precision value is "4" (precision = 4).

In such a manner, the image quality of a decoded image obtained by decoding 3D data encoded by the video-based approach depends on the occupancy-map precision value (precision), and so in a case that the precision value is large as compared with the intricacy of an image, there has been a fear that the image quality of the decoded image deteriorates.

### <Control of Precision Value>

In view of this, it is made possible to control the precision (precision values) of occupancy maps (the precision (precision value) is made variable).

For example, a plurality of maps (occupancy maps) indicating whether or not there is data at each position on one frame image having arranged thereon a patch that is an image obtained by projecting 3D data representing a three-dimensional structure onto a two-dimensional plane is generated, and a bitstream including encoded data of the frame image and encoded data of a plurality of the generated maps is generated.

For example, an image processing apparatus includes a map generating section that generates a plurality of maps (occupancy maps) indicating whether or not there is data at each position on one frame image having arranged thereon a patch that is an image obtained by projecting 3D data representing a three-dimensional structure onto a two-dimensional plane, and a bitstream generating section that generates a bitstream including encoded data of the frame image and encoded data of a plurality of the maps generated by the map generating section.

In such a way, it is possible to change a mac (occupancy map) to be applied to each specific region of a frame image having arranged thereon a patch. Accordingly, for example, it is possible to apply a map (occupancy map) with a different precision value to each specific region. That is, it is substantially possible to make the precision value variable depending on positions. Accordingly, for example, for any of positions on the frame image, it is possible to determine whether or not there is data according to a map (occupancy map) with a precision value suited for the local resolution (the intricacy of a pattern) of the position. Accordingly, deterioration of the image quality of a decoded image (the quality of reconstructed 3D data) can be suppressed while increase of a code amount (deterioration of encoding efficiency) is suppressed.

In addition, for example, a plurality of maps (occupancy maps) that corresponds to a frame image having arranged thereon a patch that is an image obtained by projecting 3D data representing a three-dimensional structure onto a two-dimensional plane and indicates whether or not there is data at each position is used to reconstruct the 3D data from the patch.

For example, an image processing apparatus includes a reconstructing section that uses a plurality of maps (occupancy maps) that corresponds to a frame image having arranged thereon a patch that is an image obtained by projecting 3D data representing a three-dimensional structure onto a two-dimensional plane and indicates whether or not there is data at each position, to reconstruct the 3D data from the patch.

In such a way, it is possible to reconstruct 3D data by applying a map (occupancy map) having a different precision value to each specific region of a frame image having arranged thereon a patch. That is, it is substantially possible to make the precision value variable depending on positions. Accordingly, for example, for any of positions on the frame image, it is possible to reconstruct 3D data according to a map (occupancy map) with a precision value suited for the local resolution (the intricacy of a pattern) of the position. Accordingly, deterioration of the image quality of a decoded image (the quality of reconstructed 3D data) can be suppressed while increase of a code amount (deterioration of encoding efficiency) is suppressed.

In addition, for example, a map (occupancy map) that indicates whether or not there is data at each position on a frame image having arranged thereon a patch that is an image obtained by projecting 3D data representing a three-dimensional structure onto a two-dimensional plane and has a plurality of levels of precision set therefor in terms of whether or not there is data is generated, and a bitstream including encoded data of the frame image and encoded data of the generated map is generated.

For example, an image processing apparatus includes a map generating section that generates a map (occupancy map) that indicates whether or not there is data at each position on a frame image having arranged thereon a patch that is an image obtained by projecting 3D data representing a three-dimensional structure onto a two-dimensional plane and has a plurality of levels of precision set therefor in terms of whether or not there is data, and a bitstream generating section that generates a bitstream including encoded data of the frame image and encoded data of the map generated by the map generating section.

In such a way, it is possible to change the map (occupancy-map) precision value for each specific region of a frame image having arranged thereon a patch. That is, it is possible to make the precision value variable depending on positions. Accordingly, for example, for any of positions on the frame image, it is possible to determine whether or not there is data according to a map (occupancy map) with a precision value suited for the local resolution (the intricacy of a pattern) of the position. Accordingly, deterioration of the image quality of a decoded image (the quality of reconstructed 3D data) can be suppressed while increase of a code amount (deterioration of encoding efficiency) is suppressed.

In addition, for example, a map (occupancy map) that indicates whether or not there is data at each position on a frame image having arranged thereon a patch that is an image obtained by projecting 3D data representing a three-dimensional structure onto a two-dimensional plane and has a plurality of levels of precision set therefor in terms of whether or not there is data is used to reconstruct the 3D data from the patch.

For example, an image processing apparatus includes a reconstructing section that uses a map (occupancy map) that indicates whether or not there is data at each position on a frame image having arranged thereon a patch that is an image obtained by projecting 3D data representing a three-dimensional structure onto a two-dimensional plane and has a plurality of levels of precision set therefor in terms of whether or not there is data, to reconstruct the 3D data from the patch.

In such a way, it is possible to reconstruct 3D data by applying a map (occupancy map) having a different precision value to each specific region of a frame image having arranged thereon a patch. That is, it is possible to make the precision value variable depending on positions. Accordingly, for example, for any of positions on the frame image, it is possible to reconstruct 3D data according to a map (occupancy map) with a precision value suited for the local resolution (the intricacy of a pattern) of the position. Accordingly, deterioration of the image quality of a decoded image (the quality of reconstructed 3D data) can be suppressed while increase of a code amount (deterioration of encoding efficiency) is suppressed.

### <Present Technology Related to Video-Based Approach>

The present technology related to the video-based approach as explained above is explained. As illustrated in Table 61 in FIG. 7, the precision of occupancy maps are made variable in the present technology.

In a first method (map specification 1) of making the precision variable, a plurality of occupancy maps having mutually different levels of precision (precision values) is generated and transmitted.

For example, as illustrated in FIG. 8, an occupancy map 10-1 with a precision value "4" (Precision = 4) and an occupancy map 10-2 with a precision value "1"

### (Precision = 1) are generated and transmitted.

In the case illustrated in FIG. 8, occupancy is represented at any of the levels of precision (OR) for each block. In the case of the example illustrated in FIG. 8, the occupancy map 10-1 is applied to two left blocks of an occupancy map. Accordingly, the occupancy of the patch 21 and the patch 23 is represented at the precision of the precision value "4" (Precision = 4). In contrast to this, the occupancy map 10-2 is applied to two right blocks of the occupancy map. Accordingly, the occupancy of the patch 22 is represented at the precision of the precision value "1" (Precision = 1).

In such a way, the precision value can be made variable depending on positions. Accordingly, deterioration of the image quality of a decoded image (the quality of reconstructed 3D data) can be suppressed while deterioration of encoding efficiency is suppressed.

Note that information of differences from low-precision occupancy may be represented by high-precision occupancy (XOR). For example, as illustrated in FIG. 9, it may be determined whether or not there is data in the patch 21 to the patch 23 by using the occupancy map 10-1 (i.e., at the precision of the precision value "4" (Precision = 4)) (actually, the patch 21, a patch 22-1, and the patch 23), and for portions (a patch 22-2 and a patch 22-3) that cannot be represented at the precision, it may be determined whether or not there is data by using the occupancy map 10-2 (i.e., at the precision of the precision value "1" (Precision = 1)). Note that since a determination regarding whether or not there is data by using the occupancy map 10-2 is made by using exclusive OR (XOR) with a result of a determination made by using the occupancy map 10-1, a determination regarding the patch 22-1 may also be made in the occupancy map 10-2.

In such a way, similar to the case illustrated in FIG. 8, the precision value can be made variable depending on positions. Accordingly, deterioration of the image quality of a decoded image (the quality of reconstructed 3D data) can be suppressed while deterioration of encoding efficiency is suppressed.

An example of the data structure of an occupancy map in the cases illustrated in FIG. 8 and FIG. 9 is illustrated in FIG. 10. Underlined portions in FIG. 10 are differences from the case illustrated in FIG. 5. That is, in this case, the data of the occupancy map includes information related to precision. As information related to the precision, for example, the number of levels of precision (Number of Occupancy Precision (n)) set in the data is set. In addition, the n levels of precision (precision values) are set (Occupancy Precision (N1), Occupancy Precision (N2), ...).

Then, a result of a determination regarding whether or not there is data is set for each sub-block (N1xN1, N2xN2, ...) with one of the precision values.

Returning to FIG. 7, in a second method (map specification 2) of making the precision variable, an occupancy map including blocks having different levels of precision (precision values) is generated and transmitted.

For example, as illustrated in FIG. 11, the occupancy map 10 in which precision can be set for each block may be generated and transmitted. In the case of the example illustrated in FIG. 11, in the occupancy map 10, the precision value of sub-blocks (sub-blocks 12-1 and sub-blocks 12-2) in two left blocks (a block 11-1 and a block 11-2) is "4" (Precision = 4), and the precision value of sub-blocks (sub-blocks 12-3 and sub-blocks 12-4) in two right blocks (a block 11-3 and a block 11-4) is "8" (Precision = 8). That is, it is determined whether or not there is data in the patch 21 and the patch 23 at the precision of the precision value "4" (Precision = 4), and it is determined whether or not there is data in the patch 22 at the precision of the precision value "8"

### (Precision = 8).

In such a way, the precision value can be made variable depending on positions. Accordingly, deterioration of the image quality of a decoded image (the quality of reconstructed 3D data) can be suppressed while deterioration of encoding efficiency is suppressed.

An example of the data structure of an occupancy map in this case is illustrated in FIG. 13. Underlined portions in FIG. 13 are differences from the case illustrated in FIG. 10. That is, in this case, the data of the occupancy map does not include information of the number of levels of precision (Number of Occupancy Precision (n)) and the n levels of precision (Occupancy Precision (N1), Occupancy Precision (N2), ...).

Then, a precision value (OccupancyPrecision (N')) is set for each block (For each block (ResxRes)), and a result of a determination regarding whether or not there is data is set for each sub-block (N'xN', ...) with one of the precision values.

Note that the occupancy map 10 in which precision can be set for each patch may be generated and transmitted. That is, the precision value of each sub-block like the ones illustrated in FIG. 11 may be set for each patch, and the precision value corresponding to the patch may be used as the precision value of sub-blocks including the patch.

For example, in the case illustrated in FIG. 11, the precision value "8" (Precision = 8) is set for the patch 22, and the precision value of sub-blocks (sub-blocks 12-3 and sub-blocks 12-4) including the patch 22 is set to "8" (Precision = 8).

In such a way, similar to the case that precision is set for each block, the precision value can be made variable depending on positions. Accordingly, deterioration of the image quality of a decoded image (the quality of reconstructed 3D data) can be suppressed while deterioration of encoding efficiency is suppressed.

An example of the data structure of an occupancy map in this case is illustrated in FIG. 12. Underlined portions in FIG. 12 are differences from the case illustrated in FIG. 10. That is, in this case, the data of the occupancy map does not include information of the number of levels of precision (Number of Occupancy Precision (n)) and the n levels of precision (Occupancy Precision (N1), Occupancy Precision (N2), ...).

Then, a precision value (Precision (N')) is set for each patch (For each patch), and the precision value of sub-blocks belonging to the patch is set to N' (N'xN').

Returning to FIG. 7, the first method and second method mentioned above may be combined. This is treated as a third method (map specification 3) of making the precision variable. In this case, a plurality of occupancy maps including blocks having different levels of precision (precision values) is generated and transmitted.

In such a way, the precision value can be made variable depending on positions. Accordingly, deterioration of the image quality of a decoded image (the quality of reconstructed 3D data) can be suppressed while deterioration of encoding efficiency is suppressed.

As mentioned above, by applying the present technology, it is possible to set the precision (precision value) of each position (i.e., it is possible to make precision variable) in any case of the methods.

Note that the method of deciding the precision may be any method. For example, optimum precision values may be determined on the basis of RD costs. In addition, for example, precision values decided may be the subjectively most effective values. In addition, for example, precision values may be decided on the basis of characteristics of specific regions (e.g., "face," "hair," etc.), regions of interest (ROI) and the like. In addition, for example, precision values may be decided by using, as indices, the quality of a reconfigured point cloud and a bit amount necessary for transmission of an occupancy map. In addition, for example, precision values may be decided on the basis of a relation between an occupancy map and the number of pixels of a specific region.

### <2. First Embodiment>

### <Encoding Apparatus>

Next, configurations that realize techniques like the ones above are explained. FIG. 14 is a block diagram illustrating one example of the configuration of an encoding apparatus which is one aspect of an image processing apparatus to which the present technology is applied. An encoding apparatus 100 illustrated in FIG. 14 is an apparatus that performs encoding by a two-dimensional-image encoding method by projecting 3D data like a point cloud onto a two-dimensional plane (an encoding apparatus to which the video-based approach is applied).

Note that FIG. 14 illustrates main ones of processing sections, data flows and the like, and those illustrated in FIG. 14 are not necessarily the only ones. That is, in the encoding apparatus 100, there may be a processing section not illustrated as a block in FIG. 14, or there may be a process or a data flow not illustrated as an arrow or the like in FIG. 14. Similarly, this applies also to other figures for explaining processing sections and the like in the encoding apparatus 100.

As illustrated in FIG. 14, the encoding apparatus 100 has a patch decomposing section 111, a packing section 112, an OMap generating section 113, an auxiliary-patch information compressing section 114, a video encoding section 115, a video encoding section 116, an OMap encoding section 117, and a multiplexer 118.

The patch decomposing section 111 performs a process related to decomposition of 3D data. For example, the patch decomposing section 111 acquires 3D data (e.g., a point cloud (Point Cloud)) input to the encoding apparatus 100 and representing a three-dimensional structure. In addition, the patch decomposing section 111 decomposes the acquired 3D data into a plurality of segments, projects the 3D data onto a two-dimensional plane for each of the segments, and generates patches of positional information and patches of attribute information.

The patch decomposing section 111 supplies the generated information related to each patch to the packing section 112. In addition, the patch decomposing section 111 supplies auxiliary-patch information which is information related to the decomposition to the auxiliary-patch information compressing section 114.

The packing section 112 performs a process related to packing of data. For example, the packing section 112 acquires the data (patches) which is supplied from the patch decomposing section 111 and is about the two-dimensional plane onto which the 3D data is projected for each region. In addition, the packing section 112 arranges each acquired patch on a two-dimensional image and packs the patches as a video frame. For example, the packing section 112 packs, as a video frame, each of patches of positional information (Geometry) indicating the positions of points and patches of attribute information (Texture) such as color information added to the positional information.

The packing section 112 supplies the generated video frame to the OMap generating section 113. In addition, the packing section 112 supplies control information related to the packing to the multiplexer 118.

The OMap generating section 113 performs a process related to generation of an occupancy map. For example, the OMap generating section 113 acquires the data supplied from the packing section 112. In addition, the OMap generating section 113 generates an occupancy map corresponding to the positional information and attribute information. For example, the OMap generating section 113 generates a plurality of occupancy maps for one frame image having arranged thereon a patch. In addition, for example, the OMap generating section 113 generates an occupancy map having a plurality of levels of precision set therefor. The OMap generating section 113 supplies the generated occupancy map and various types of information acquired from the packing section 112 to processing sections that are arranged downstream. For example, the OMap generating section 113 supplies the video frame of the positional information (Geometry) to the video encoding section 115. In addition, for example, the OMap generating section 113 supplies the video frame of the attribute information (Texture) to the video encoding section 116. Furthermore, for example, the OMap generating section 113 supplies the occupancy map to the OMap encoding section 117.

The auxiliary-patch information compressing section 114 performs a process related to compression of auxiliary-patch information. For example, the auxiliary-patch information compressing section 114 acquires the data supplied from the patch decomposing section 111. The auxiliary-patch information compressing section 114 encodes (compresses) the auxiliary-patch information included in the acquire data. The auxiliary-patch information compressing section 114 supplies the encoded data of the obtained auxiliary-patch information to the multiplexer 118.

The video encoding section 115 performs a process related to encoding of a video frame of positional information (Geometry). For example, the video encoding section 115 acquires the video frame of the positional information (Geometry) supplied from the OMap generating section 113. In addition, the video encoding section 115 encodes the video frame of the acquired positional information (Geometry) by any two-dimensional-image encoding method such as AVC or HEVC, for example. The video encoding section 115 supplies the encoded data obtained by the encoding (the encoded data of the video frame of the positional information (Geometry)) to the multiplexer 118.

The video encoding section 116 performs a process related to encoding of a video frame of attribute information (Texture). For example, the video encoding section 116 acquires the video frame of the attribute information (Texture) supplied from the OMap generating section 113. In addition, the video encoding section 116 encodes the video frame of the acquired attribute information (Texture) by any two-dimensional-image encoding method such as AVC or HEVC, for example. The video encoding section 116 supplies the encoded data obtained by the encoding (the encoded data of the video frame of the attribute information (Texture)) to the multiplexer 118.

The OMap encoding section 117 performs a process related to encoding of an occupancy map. For example, the OMap encoding section 117 acquires the occupancy map supplied from the OMap generating section 113. In addition, the OMap encoding section 117 encodes the acquired occupancy map by any encoding method such as arithmetic coding, for example. The OMap encoding section 117 supplies the encoded data obtained by the encoding (the encoded data of the occupancy map) to the multiplexer 118.

The multiplexer 118 performs a process related to multiplexing. For example, the multiplexer 118 acquires the encoded data of the auxiliary-patch information supplied from the auxiliary-patch information compressing section 114. In addition, the multiplexer 118 acquires the control information related to the packing supplied from the packing section 112. In addition, the multiplexer 118 acquires the encoded data of the video frame of the positional information (Geometry) supplied from the video encoding section 115. In addition, the multiplexer 118 acquires the encoded data of the video frame of the attribute information (Texture) supplied from the video encoding section 116. In addition, the multiplexer 118 acquires the encoded data of the occupancy map supplied from the OMap encoding section 117.

The multiplexer 118 multiplexes the acquired information and generates a bitstream (Bitstream). The multiplexer 118 outputs the generated bitstream to the outside of the encoding apparatus 100.

### <OMap Generating Section>

FIG. 15 is a block diagram illustrating a main configuration example of the OMap generating section 113 illustrated in FIG. 14. As illustrated in FIG. 15, the OMap generating section 113 has a precision value deciding section 151 and an OMap generating section 152.

The precision value deciding section 151 performs a process related to decision of precision values. For example, the precision value deciding section 151 acquires the data supplied from the packing section 112. In addition, the precision value deciding section 151 decides the precision value of each position on the basis of the data or in other manners.

Note that the method of deciding the precision values may be any method. For example, optimum precision values may be determined on the basis of RD costs. In addition, for example, precision values decided may be the subjectively most effective values. In addition, for example, precision values may be decided on the basis of characteristics of specific regions (e.g., "face," "hair," etc.), regions of interest (ROI) and the like. In addition, for example, precision values may be decided by using, as indices, the quality of a reconfigured point cloud and a bit amount necessary for transmission of an occupancy map. In addition, for example, precision values may be decided on the basis of a relation between an occupancy map and the number of pixels of a specific region.

Upon deciding the precision values, the precision value deciding section 151 supplies data acquired from the packing section 112 to the OMap generating section 152 along with the information of the precision values.

The OMap generating section 152 performs a process related to generation of an occupancy map. For example, the OMap generating section 152 acquires the data supplied from the precision value deciding section 151. In addition, on the basis of the video frames of the positional information and attribute information supplied from the precision value deciding section 151, the precision values decided by the precision value deciding section 151, and the like, the OMap generating section 152 generates an occupancy map having precision values that are variable depending on positions, like the ones explained with reference to FIG. 8 to FIG. 13, for example.

The OMap generating section 152 supplies various types of information acquired from the precision value deciding section 151 to processing sections that are arranged downstream, along with the generated occupancy map.

### <Decoding Apparatus>

FIG. 16 is a block diagram illustrating one example of the configuration of a decoding apparatus which is one aspect of an image processing apparatus to which the present technology is applied. A decoding apparatus 200 illustrated in FIG. 16 is an apparatus that decodes, by a two-dimensional-image decoding method, encoded data obtained by projecting 3D data like a point cloud onto a two-dimensional plane and encoding the projected data, and projects the decoded data onto a three-dimensional space (a decoding apparatus to which the video-based approach is applied).

Note that FIG. 16 illustrates main ones of processing sections, data flows and the like, and those illustrated in FIG. 16 are not necessarily the only ones. That is, in the decoding apparatus 200, there may be a processing section not illustrated as a block in FIG. 16, or there may be a process or a data flow not illustrated as an arrow or the like in FIG. 16. Similarly, this applies also to other figures for explaining processing sections and the like in the decoding apparatus 200.

As illustrated in FIG. 16, the decoding apparatus 200 has a demultiplexer 211, an auxiliary-patch information decoding section 212, a video decoding section 213, a video decoding section 214, an OMap decoding section 215, an unpacking section 216, and a 3D reconstructing section 217.

The demultiplexer 211 performs a process related to demultiplexing of data. For example, the demultiplexer 211 acquires a bitstream input to the decoding apparatus 200. The bitstream is supplied from the encoding apparatus 100, for example. The demultiplexer 211 demultiplexes this bitstream, extracts encoded data of auxiliary-patch information, and supplies the extracted encoded data to the auxiliary-patch information decoding section 212. In addition, the demultiplexer 211 extracts encoded data of a video frame of positional information (Geometry) from the bitstream by demultiplexing, and supplies the extracted encoded data to the video decoding section 213. Furthermore, the demultiplexer 211 extracts encoded data of a video frame of attribute information (Texture) from the bitstream by demultiplexing, and supplies the extracted encoded data to the video decoding section 214. In addition, the demultiplexer 211 extracts encoded data of an occupancy map from the bitstream by demultiplexing, and supplies the extracted encoded data to the OMap decoding section 215. In addition, the demultiplexer 211 extracts control information related to packing from the bitstream by demultiplexing, and supplies the extracted control information to the unpacking section 216.

The auxiliary-patch information decoding section 212 performs a process related to decoding of encoded data of auxiliary-patch information. For example, the auxiliary-patch information decoding section 212 acquires the encoded data of the auxiliary-patch information supplied from the demultiplexer 211. In addition, the auxiliary-patch information decoding section 212 decodes the encoded data of the auxiliary-patch information included in the acquired data. The auxiliary-patch information decoding section 212 supplies the auxiliary-patch information obtained by the decoding to the 3D reconstructing section 217.

The video decoding section 213 performs a process related to decoding of encoded data of a video frame of positional information (Geometry). For example, the video decoding section 213 acquires the encoded data of the video frame of the positional information (Geometry) supplied from the demultiplexer 211. In addition, the video decoding section 213 decodes the encoded data acquired from the demultiplexer 211 and obtains the video frame of the positional information (Geometry). The video decoding section 213 supplies the decoded data of the positional information (Geometry) in an encoding unit to the unpacking section 216.

The video decoding section 214 performs a process related to decoding of encoded data of a video frame of attribute information (Texture). For example, the video decoding section 214 acquires encoded data of the video frame of the attribute information (Texture) supplied from the demultiplexer 211. In addition, the video decoding section 214 decodes the encoded data acquired from the demultiplexer 211 and obtains the video frame of the attribute information (Texture). The video decoding section 214 supplies the decoded data of the attribute information (Texture) in an encoding unit to the unpacking section 216.

The OMap decoding section 215 performs a process related to decoding of encoded data of an occupancy map. For example, the OMap decoding section 215 acquires the encoded data of the occupancy map supplied from the demultiplexer 211. In addition, the OMap decoding section 215 decodes the encoded data acquired from the demultiplexer 211 and obtains the occupancy map. The OMap decoding section 215 supplies the decoded data of the occupancy map in an encoding unit to the unpacking section 216.

The unpacking section 216 performs a process related to unpacking. For example, the unpacking section 216 acquires the video frame of the positional information (Geometry) from the video decoding section 213, acquires the video frame of the attribute information (Texture) from the video decoding section 214, and acquires the occupancy map from the OMap decoding section 215. In addition, on the basis of the control information related to the packing, the unpacking section 216 unpacks the video frame of the positional information (Geometry) and the video frame of the attribute information (Texture). The unpacking section 216 supplies the data (patches, etc.) of the positional information (Geometry), the data (patches, etc.) of the attribute information (Texture), the data of the occupancy map and the like that are obtained by the unpacking to the 3D reconstructing section 217.

The 3D reconstructing section 217 performs a process related to reconstruction of 3D data. For example, the 3D reconstructing section 217 reconstructs 3D data (Point Cloud) on the basis of the auxiliary-patch information supplied from the auxiliary-patch information decoding section 212, the data of the positional information (Geometry) supplied from the unpacking section 216, the data of the attribute information (Texture), the data of the occupancy map, and the like. For example, the 3D reconstructing section 217 reconstructs 3D data from patches of the positional information and attribute information (a frame image having the patches arranged thereon) by using a plurality of occupancy maps corresponding to the patches. In addition, for example, the 3D reconstructing section 217 reconstructs 3D data from patches of the positional information and attribute information by using an occupancy map having a plurality of levels of precision set therefor in terms of whether or not there is data. The 3D reconstructing section 217 outputs the 3D data obtained by such processes to the outside of the decoding apparatus 200.

For example, this 3D data is supplied to a display section, and an image thereof is displayed thereon, is recorded on a recording medium, or is supplied to another apparatus via communication.

By including such a configuration, it is possible to change an occupancy map to be applied to each specific region of a frame image having arranged thereon a patch. That is, it is substantially possible to make the precision value variable depending on positions. Accordingly, for example, for any of positions on the frame image, it is possible to determine whether or not there is data or to reconstruct 3D data, according to an occupancy map with a precision value suited for the local resolution (the intricacy of a pattern) of the position. Accordingly, deterioration of the image quality of a decoded image (the quality of reconstructed 3D data) can be suppressed while increase of a code amount (deterioration of encoding efficiency) is suppressed.

In addition, by including such a configuration, it is possible to change the occupancy-map precision value for each specific region of a frame image having arranged thereon a patch. That is, it is possible to make the precision value variable depending on positions. Accordingly, for example, for any of positions on the frame image, it is possible to determine whether or not there is data or to reconstruct 3D data, according to an occupancy map with a precision value suited for the local resolution (the intricacy of a pattern) of the position. Accordingly, deterioration of the image quality of a decoded image (the quality of reconstructed 3D data) can be suppressed while increase of a code amount (deterioration of encoding efficiency) is suppressed.

### <Flow of Encoding Process>

Next, an example of the flow of an encoding process executed by the encoding apparatus 100 is explained with reference to the flowchart illustrated in FIG. 17.

When the encoding process is started, in Step S101, the patch decomposing section 111 of the encoding apparatus 100 projects 3D data onto a two-dimensional plane and decomposes the projected 3D data into patches.

In Step S102, the auxiliary-patch information compressing section 114 compresses auxiliary-patch information generated in Step S101.

In Step S103, the packing section 112 performs packing. That is, the packing section 112 packs each patch of positional information and attribute information generated in Step S101 as a video frame. In addition, the packing section 112 generates control information related to the packing.

In Step S104, the OMap generating section 113 generates an occupancy map corresponding to the video frames of the positional information and attribute information generated in Step S103.

In Step S105, by a two-dimensional-image encoding method, the video encoding section 115 encodes a geometry video frame which is the video frame of the positional information generated in Step S103.

In Step S106, by a two-dimensional-image encoding method, the video encoding section 116 encodes a color video frame which is the video frame of the attribute information generated in Step S103.

In Step S107, by a predetermined encoding method, the OMap encoding section 117 encodes the occupancy map generated in Step S104.

In Step S108, the multiplexer 118 multiplexes the thus-generated various types of information (e.g., the encoded data generated in Step S105 to Step S107, the control information related to the packing generated in Step S103, etc.), and generates a bitstream including these pieces of information.

In Step S109, the multiplexer 118 outputs the bitstream generated in Step S108 to the outside of the encoding apparatus 100.

When the process in Step S109 ends, the encoding process ends.

### <Flow of Occupancy Map Generation Process>

Next, an example of the flow of the occupancy map generation process executed in Step S104 illustrated in FIG. 17 is explained with reference to the flowchart illustrated in FIG. 18. Here, a process of generating an occupancy map in a case like the one explained with reference to FIG. 8 that a plurality of occupancy maps having different levels of precision is used to represent occupancy of each block at any of the levels of precision (OR) is explained.

When the occupancy map generation process is started, in Step S121, the precision value deciding section 151 of the OMap generating section 113 derives a list of precision values (precision value candidates) that can be set for blocks specified by occupancy resolution.

In Step S122, on the basis of the list, the precision value deciding section 151 decides a precision value of each block. The method of deciding the precision value may be any method. For example, optimum precision values may be determined on the basis of RD costs. In addition, for example, precision values decided may be the subjectively most effective values. In addition, for example, precision values may be decided on the basis of characteristics of specific regions (e.g., "face," "hair," etc.), regions of interest (ROI) and the like. In addition, for example, precision values may be decided by using, as indices, the quality of a reconfigured point cloud and a bit amount necessary for transmission of an occupancy map. In addition, for example, precision values may be decided on the basis of a relation between an occupancy map and the number of pixels of a specific region.

In Step S123, the OMap generating section 152 derives the types of the thus-decided precision values of the precision values for one frame.

In Step S124, the OMap generating section 152 generates an occupancy map of each precision value so as to represent the occupancy of each block by its precision value.

In Step S125, the OMap generating section 152 combines all the thus-generated occupancy maps and generates data with a configuration like the one illustrated in FIG. 10, for example.

When the process in Step S125 ends, the occupancy map generation process ends, and the process returns to FIG. 17.

By executing the processes in the manner mentioned above, the encoding apparatus 100 can change an occupancy map to be applied to each specific region of a frame image having arranged thereon a patch. Accordingly, for example, it is possible to apply an occupancy map with a different precision value to each specific region. That is, it is substantially possible to make the precision value variable depending on positions. Accordingly, for example, for any of positions on the frame image, it is possible to determine whether or not there is data according to an occupancy map with a precision value suited for the local resolution (the intricacy of a pattern) of the position. Accordingly, deterioration of the image quality of a decoded image (the quality of reconstructed 3D data) can be suppressed while increase of a code amount (deterioration of encoding efficiency) is suppressed.

### <Flow of Occupancy Map Generation Process>

Next, an example of the flow of the occupancy map generation process executed in Step S104 illustrated in FIG. 17 in a case like the one explained with reference to FIG. 9 that information of differences from low-precision occupancy is represented by high-precision occupancy by using a plurality of occupancy maps having different levels of precision (XOR) is explained with reference to the flowchart illustrated in FIG. 19.

When the occupancy map generation process is started, each process in Step S141 to Step S143 is executed in a similar manner to that in the case illustrated for each process in Step S121 to Step S123 (FIG. 18).

In Step S144, the OMap generating section 152 generates an occupancy map that represents occupancy of residual information between image data and occupancy maps up to the preceding occupancy map, in the descending order of precision values.

In Step S145, the OMap generating section 152 combines all the thus-generated occupancy maps and generates data with a configuration like the one illustrated in FIG. 10, for example.

When the process in Step S145 ends, the occupancy map generation process ends, and the process returns to FIG. 17.

By executing the processes in the manner mentioned above, the encoding apparatus 100 can change an occupancy map to be applied to each specific region of a frame image having arranged thereon a patch. Accordingly, for example, it is possible to apply an occupancy map with a different precision value to each specific region. That is, it is substantially possible to make the precision value variable depending on positions. Accordingly, for example, for any of positions on the frame image, it is possible to determine whether or not there is data according to an occupancy map with a precision value suited for the local resolution (the intricacy of a pattern) of the position. Accordingly, deterioration of the image quality of a decoded image (the quality of reconstructed 3D data) can be suppressed while increase of a code amount (deterioration of encoding efficiency) is suppressed.

### <Flow of Occupancy Map Generation Process>

Next, an example of the flow of the occupancy map generation process executed in Step S104 illustrated in FIG. 17 in a case like the one explained with reference to FIG. 11 that an occupancy map including blocks having different levels of precision is used to set precision for each patch is explained with reference to the flowchart illustrated in FIG. 20.

When the occupancy map generation process is started, in Step S161, the precision value deciding section 151 derives a list of precision values (precision value candidates) that can be set for each patch.

In Step S162, on the basis of the list, the precision value deciding section 151 decides a precision value of each patch. The method of deciding the precision value may be any method. For example, optimum precision values may be determined on the basis of RD costs. In addition, for example, precision values decided may be the subjectively most effective values. In addition, for example, precision values may be decided on the basis of characteristics of specific regions (e.g., "face," "hair," etc.), regions of interest (ROI) and the like. In addition, for example, precision values may be decided by using, as indices, the quality of a reconfigured point cloud and a bit amount necessary for transmission of an occupancy map. In addition, for example, precision values may be decided on the basis of a relation between an occupancy map and the number of pixels of a specific region.

In Step S163, the OMap generating section 152 determines a patch to which each block belongs.

In Step S164, the OMap generating section 152 determines a precision value corresponding to the patch to which each block belongs.

In Step S165, the OMap generating section 152 determines occupancy of each sub-block at the precision value of the block to which the sub-block belongs.

In Step S166, the OMap generating section 152 combines occupancy of all the blocks and generates an occupancy map including the blocks having different levels of precision.

When the process in Step S166 ends, the occupancy map generation process ends, and the process returns to FIG. 17.

By executing the processes in the manner mentioned above, the encoding apparatus 100 can change the occupancy-map precision value for each specific region of a frame image having arranged thereon a patch. That is, it is possible to make the precision value variable depending on positions. Accordingly, for example, for any of positions on the frame image, it is possible to determine whether or not there is data according to an occupancy map with a precision value suited for the local resolution (the intricacy of a pattern) of the position. Accordingly, deterioration of the image quality of a decoded image (the quality of reconstructed 3D data) can be suppressed while increase of a code amount (deterioration of encoding efficiency) is suppressed.

### <Flow of Occupancy Map Generation Process>

Next, an example of the flow of the occupancy map generation process executed in Step S104 illustrated in FIG. 17 in a case like the one explained with reference to FIG. 11 that an occupancy map including blocks having different levels of precision is used to set precision for each block is explained with reference to the flowchart illustrated in FIG. 21.

When the occupancy map generation process is started, in Step S181, the precision value deciding section 151 derives a list of precision values (precision value candidates) that can be set for blocks specified by occupancy resolution.

In Step S182, on the basis of the list, the precision value deciding section 151 decides a precision value of each block. The method of deciding the precision value may be any method. For example, optimum precision values may be determined on the basis of RD costs. In addition, for example, precision values decided may be the subjectively most effective values. In addition, for example, precision values may be decided on the basis of characteristics of specific regions (e.g., "face," "hair," etc.), regions of interest (ROI) and the like. In addition, for example, precision values may be decided by using, as indices, the quality of a reconfigured point cloud and a bit amount necessary for transmission of an occupancy map. In addition, for example, precision values may be decided on the basis of a relation between an occupancy map and the number of pixels of a specific region.

In Step S183, the OMap generating section 152 determines occupancy of each sub-block at the precision value of the block to which the sub-block belongs.

In Step S184, the OMap generating section 152 combines occupancy of all the blocks and generates an occupancy map including the blocks having different levels of precision.

When the process in Step S184 ends, the occupancy map generation process ends, and the process returns to FIG. 17.

By executing the processes in the manner mentioned above, the encoding apparatus 100 can change the occupancy-map precision value for each specific region of a frame image having arranged thereon a patch. That is, it is possible to make the precision value variable depending on positions. Accordingly, for example, for any of positions on the frame image, it is possible to determine whether or not there is data according to an occupancy map with a precision value suited for the local resolution (the intricacy of a pattern) of the position. Accordingly, deterioration of the image quality of a decoded image (the quality of reconstructed 3D data) can be suppressed while increase of a code amount (deterioration of encoding efficiency) is suppressed.

### <Flow of Decoding Process>

Next, an example of the flow of a decoding process executed by the decoding apparatus 200 is explained with reference to the flowchart illustrated in FIG. 22.

When the decoding process is started, in Step S201, the demultiplexer 211 of the decoding apparatus 200 demultiplexes a bitstream.

In Step S202, the auxiliary-patch information decoding section 212 decodes auxiliary-patch information extracted from the bitstream in Step S201.

In Step S203, the video decoding section 213 decodes encoded data of a geometry video frame (a video frame of positional information) extracted from the bitstream in Step S201.

In Step S204, the video decoding section 214 decodes encoded data of a color video frame (a video frame of attribute information) extracted from the bitstream in Step S201.

In Step S205, the OMap decoding section 215 decodes encoded data of an occupancy map extracted from the bitstream in Step S201.

In Step S206, the unpacking section 216 unpacks the geometry video frame and the color video frame decoded in Step S203 to Step S205 and extracts patches.

In Step S207, the 3D reconstructing section 217 reconstructs 3D data such as a point cloud, for example, on the basis of the auxiliary-patch information obtained in Step S202, the patches obtained in Step S206, the occupancy map and the like.

When the process in Step S207 ends, the decoding process ends.

### <Flow of Point Cloud Reconstructing Process>

Next, an example of the flow of the point cloud reconstructing process executed in Step S207 illustrated in FIG. 22 is explained with reference to the flowchart illustrated in FIG. 23. Here, a process to be performed in a case like the one explained with reference to FIG. 8 that a plurality of occupancy maps having different levels of precision is used to represent occupancy of each block at any of the levels of precision (OR) is explained.

When the point cloud reconstructing process is started, in Step S221, the 3D reconstructing section 217 selects processing target current coordinates (x, y).

In Step S222, the 3D reconstructing section 217 selects a current precision value which is a precision value of the current coordinates, and acquires an occupancy map corresponding to the precision value. That is, for the current coordinates, the 3D reconstructing section 217 selects one precision value for which an occupancy map exists from unprocessed precision values and acquires an occupancy map corresponding to the precision value.

In Step S223, the 3D reconstructing section 217 determines whether or not a depth (Depth) value is valid at the current coordinates. In a case that it is determined on the basis of the occupancy map that there is positional information at the current coordinates (i.e., the depth value is valid), the process proceeds to Step S224.

In Step S224, the 3D reconstructing section 217 generates a point on 3D data on the basis of the depth value of the current coordinates. When the process in Step S224 ends, the process proceeds to Step S226.

In addition, in a case it is determined in Step S223 that the depth value of the current coordinates is not valid (i.e., there is not positional information at the current coordinates), the process proceeds to Step S225.

In Step S225, for the current coordinates, the 3D reconstructing section 217 determines whether or not all the precision values for which occupancy maps exist have been processed. In a case that it is determined that there is an unprocessed precision value, the process returns to Step S222, and the subsequent processes are performed.

In addition, in a case that it is determined in Step S225 that all the precision values have been processed for the current coordinates, the process proceeds to Step S226.

In Step S226, the 3D reconstructing section 217 determines whether or not all the coordinates have been processed. In a case that it is determined that there are unprocessed coordinates, the process returns to Step S221, and the subsequent processes are executed.

In addition, in a case that it is determined in Step S226 that all the coordinates have been processed, the point cloud reconstructing process ends, and the process returns to FIG. 22.

By executing the processes in the manner mentioned above, the decoding apparatus 200 can reconstruct 3D data by applying an occupancy map having a different precision value to each specific region of a frame image having arranged thereon a patch. That is, it is substantially possible to make the precision value variable depending on positions. Accordingly, for example, for any of positions on the frame image, it is possible to reconstruct 3D data according to an occupancy map with a precision value suited for the local resolution (the intricacy of a pattern) of the position. Accordingly, deterioration of the image quality of a decoded image (the quality of reconstructed 3D data) can be suppressed while increase of a code amount (deterioration of encoding efficiency) is suppressed.

### <Flow of Point Cloud Reconstructing Process>

Next, an example of the flow of the point cloud reconstructing process executed in Step S207 illustrated in FIG. 22 in a case like the one explained with reference to FIG. 9 that a plurality of occupancy maps having different levels of precision is used to represent information of differences from low-precision occupancy by high-precision occupancy (XOR) is explained with reference to the flowchart illustrated in FIG. 24.

When the point cloud reconstructing process is started, in Step S241, the 3D reconstructing section 217 selects processing target current coordinates (x, y).

In Step S242, the 3D reconstructing section 217 acquires occupancy maps of all the precision values.

In Step S243, the 3D reconstructing section 217 determines the exclusive OR of respective maps.

In Step S244, the 3D reconstructing section 217 determines whether or not a depth (Depth) value is valid at the current coordinates. In a case that it is determined on the basis of the occupancy map that there is positional information at the current coordinates (i.e., the depth value is valid), the process proceeds to Step S245.

In Step S245, the 3D reconstructing section 217 generates a point on 3D data on the basis of the depth value of the current coordinates. When the process in Step S245 ends, the process proceeds to Step S246. In addition, in a case it is determined in Step S244 that the depth value of the current coordinates is not valid (i.e., there is not positional information at the current coordinates), the process in Step S245 is omitted, and the process proceeds to Step S246.

In Step S246, the 3D reconstructing section 217 determines whether or not all the coordinates have been processed. In a case that it is determined that there are unprocessed coordinates, the process returns to Step S241, and the subsequent processes are executed.

In addition, in a case that it is determined in Step S246 that all the coordinates have been processed, the point cloud reconstructing process ends, and the process returns to FIG. 22.

By executing the processes in the manner mentioned above, the decoding apparatus 200 can reconstruct 3D data by applying an occupancy map having a different precision value to each specific region of a frame image having arranged thereon a patch. That is, it is substantially possible to make the precision value variable depending on positions. Accordingly, for example, for any of positions on the frame image, it is possible to reconstruct 3D data according to an occupancy map with a precision value suited for the local resolution (the intricacy of a pattern) of the position. Accordingly, deterioration of the image quality of a decoded image (the quality of reconstructed 3D data) can be suppressed while increase of a code amount (deterioration of encoding efficiency) is suppressed.

### <Flow of Point Cloud Reconstructing Process>

Next, an example of the flow of the point cloud reconstructing process executed in Step S207 illustrated in FIG. 22 in a case like the one explained with reference to FIG. 11 that an occupancy map including blocks having different levels of precision is used to set precision for each patch is explained with reference to the flowchart illustrated in FIG. 25.

When the point cloud reconstructing process is started, in Step S261, the 3D reconstructing section 217 selects processing target current coordinates (x, y).

In Step S262, the 3D reconstructing section 217 determines a patch to which current coordinates belong.

In Step S263, the 3D reconstructing section 217 determines a precision value of the patch.

In Step S264, the 3D reconstructing section 217 acquires an occupancy map.

In Step S265, the 3D reconstructing section 217 determines whether or not a depth (Depth) value is valid at the current coordinates. In a case that it is determined on the basis of the occupancy map that there is positional information at the current coordinates (i.e., the depth value is valid), the process proceeds to Step S266.

In Step S266, the 3D reconstructing section 217 generates a point on 3D data on the basis of the depth value of the current coordinates. When the process in Step S266 ends, the process proceeds to Step S267. In addition, in a case it is determined in Step S265 that the depth value of the current coordinates is not valid (i.e., there is no positional information at the current coordinates), the process in Step S266 is omitted, and the process proceeds to Step S267.

In Step S267, the 3D reconstructing section 217 determines whether or not all the coordinates have been processed. In a case that it is determined that there are unprocessed coordinates, the process returns to Step S261, and the subsequent processes are executed.

In addition, in a case that it is determined in Step S267 that all the coordinates have been processed, the point cloud reconstructing process ends, and the process returns to FIG. 22.

By executing the processes in the manner mentioned above, the decoding apparatus 200 can reconstruct 3D data by applying an occupancy map having a different precision value to each specific region of a frame image having arranged thereon a patch. That is, it is possible to make the precision value variable depending on positions. Accordingly, for example, for any of positions on the frame image, it is possible to reconstruct 3D data according to an occupancy map with a precision value suited for the local resolution (the intricacy of a pattern) of the position. Accordingly, deterioration of the image quality of a decoded image (the quality of reconstructed 3D data) can be suppressed while increase of a code amount (deterioration of encoding efficiency) is suppressed.

### <Flow of Point Cloud Reconstructing Process>

Next, an example of the flow of the point cloud reconstructing process executed in Step S207 illustrated in FIG. 22 in a case like the one explained with reference to FIG. 11 that an occupancy map including blocks having different levels of precision is used to set precision for each block is explained with reference to the flowchart illustrated in FIG. 26.

When the point cloud reconstructing process is started, in Step S281, the 3D reconstructing section 217 selects processing target current coordinates (x, y).

In Step S282, the 3D reconstructing section 217 determines a precision value of the current coordinates.

In Step S283, the 3D reconstructing section 217 acquires an occupancy map.

In Step S284, the 3D reconstructing section 217 determines whether or not a depth (Depth) value is valid at the current coordinates. In a case that it is determined on the basis of the occupancy map that there is positional information at the current coordinates (i.e., the depth value is valid), the process proceeds to Step S285.

In Step S285, the 3D reconstructing section 217 generates a point on 3D data on the basis of the depth value of the current coordinates. When the process in Step S285 ends, the process proceeds to Step S286. In addition, in a case it is determined in Step S284 that the depth value of the current coordinates is not valid (i.e., there is no positional information at the current coordinates), the process in Step S285 is omitted, and the process proceeds to Step S286.

In Step S286, the 3D reconstructing section 217 determines whether or not all the coordinates have been processed. In a case that it is determined that there are unprocessed coordinates, the process returns to Step S281, and the subsequent processes are executed.

In addition, in a case that it is determined in Step S286 that all the coordinates have been processed, the point cloud reconstructing process ends, and the process returns to FIG. 22.

By executing the processes in the manner mentioned above, the decoding apparatus 200 can reconstruct 3D data by applying an occupancy map having a different precision value to each specific region of a frame image having arranged thereon a patch. That is, it is possible to make the precision value variable depending on positions. Accordingly, for example, for any of positions on the frame image, it is possible to reconstruct 3D data according to an occupancy map with a precision value suited for the local resolution (the intricacy of a pattern) of the position. Accordingly, deterioration of the image quality of a decoded image (the quality of reconstructed 3D data) can be suppressed while increase of a code amount (deterioration of encoding efficiency) is suppressed.

### <3. Notes>

### <Control Information>

Control information related to the present technology explained in each embodiment above may be transmitted from an encoding side to a decoding side. For example, control information (e.g., enabled_flag) for controlling whether or not to permit (or prohibit) application of the present technology mentioned above may be transmitted. In addition, for example, control information that specifies the extent of permission (or prohibition) of application of the present technology mentioned above (e.g., the upper limit, lower limit, or both the upper limit and lower limit of block sizes, slices, pictures, sequences, components, views, layers etc.) may be transmitted.

### <Computer>

The series of processes mentioned above can also be executed by hardware, and can also be executed by software. In a case that the series of processes is executed by software, a program included in the software is installed on a computer. Here, the computer includes a computer incorporated in dedicated hardware and a general-purpose personal computer or the like, for example, that can execute various types of functions by installing various types of programs.

FIG. 27 is a block diagram illustrating a configuration example of the hardware of a computer that executes the series of processes mentioned above by using a program.

In a computer 900 illustrated in FIG. 27, a CPU (Central Processing Unit) 901, a ROM (Read Only Memory) 902, and a RAM (Random Access Memory) 903 are connected to each other via a bus 904.

The bus 904 is also connected to an input/output interface 910. The input/output interface 910 is connected with an input section 911, an output section 912, a storage section 913, a communication section 914, and a drive 915.

The input section 911 includes, for example, a keyboard, a mouse, a microphone, a touch panel, an input terminal and the like. The output section 912 includes, for example, a display, a speaker, an output terminal and the like. The storage section 913 includes, for example, a hard disk, a RAM disk, a non-volatile memory and the like. The communication section 914 includes, for example, a network interface. The drive 915 drives a removable medium 921 such as a magnetic disk, an optical disk, a magneto-optical disk, or a semiconductor memory.

In the thus-configured computer, the series of processes mentioned above is performed by the CPU 901 loading a program stored, for example, in the storage section 913 onto the RAM 903 via the input/output interface 910 and the bus 904, and executing the program. The RAM 903 also stores, as appropriate, data necessary for the CPU 901 to execute various types of processes, or the like.

The program executed by the computer (CPU 901) can be applied by being recorded on the removable medium 921 as a package medium or the like, for example. In that case, by attaching the removable medium 921 to the drive 915, the program can be installed in the storage section 913 via the input/output interface 910.

In addition, the program can also be provided via a wired or wireless transmission medium like a local area network, the Internet, and digital satellite broadcasting. In that case, the program can be received at the communication section 914 and installed in the storage section 913.

Other than these, the program can also be installed in advance in the ROM 902 or the storage section 913.

### <Application Targets of the Present Technology>

In the case explained thus far, the present technology is applied to encoding/decoding of point cloud data, but the present technology can be applied not only to these examples but also to encoding/decoding of 3D data of any standard. That is, unless contradictions with the present technology mentioned above arise, various types of processes such as encoding and decoding schemes and specifications of various types of data such as 3D data or metadata can be any processes and specifications. In addition, unless contradictions with the present technology arise, some processes and/or specifications mentioned above may be omitted.

In addition, the encoding apparatus 100 and the decoding apparatus 200 are explained thus far as application examples of the present technology, but the present technology can be applied to any configuration.

For example, the present technology may be applied to various electronic devices such as a transmitter or a receiver (e.g., a television receiver or a mobile phone) in satellite broadcasting, cable broadcasting such as cable TV, distribution on the Internet, distribution to terminals in cellular communication, or the like; or an apparatus (e.g., a hard disk recorder or a camera) that records images on a medium such as an optical disk, a magnetic disk, or a flash memory, or reproduces the images from those storage media.

In addition, for example, the present technology can also be implemented as a partial configuration of an apparatus, such as a processor (e.g., a video processor) as a system LSI (Large Scale Integration) or the like, a module (e.g., a video module) that uses a plurality of processors or the like, a unit (e.g., a video unit) that uses a plurality of modules or the like, or a set (e.g., a video set) which is a unit having still other additional functions.

In addition, for example, the present technology can also be applied to a network system including a plurality of apparatuses. For example, the present technology may be implemented by cloud computing in which processes are shared by plural apparatuses via a network and performed by those apparatuses in cooperation with each other. For example, the present technology may be implemented in a cloud service that provides a service related to images (moving images) to any terminal such as a computer, an AV (Audio Visual) device, a mobile information processing terminal, or an IoT (Internet of Things) device.

Note that in the present specification, a system means a set of a plurality of constituent elements (apparatuses, modules (components), etc.), and it does not matter whether or not all the constituent elements are located in a single housing. Accordingly, plural apparatuses housed in separate housings and connected via a network, and one apparatus with one housing having housed therein a plurality of modules are both systems.

### <Fields/Use to which the Present Technology can be Applied>

Systems, apparatuses, processing sections and the like to which the present technology is applied can be used in any field such as, for example, transportation, medical care, crime prevention, agriculture, the livestock industry, the mining industry, the beauty industry, factories, home electric appliances, meteorology, or nature monitoring. In addition, its use in those fields may also be any use.

### <Others>

Note that in the present specification, a "flag" is information for identifying a plurality of states, and the information includes not only information used when two states of true (1) or false (0) are identified, but also information that allows identification of three states or more. Accordingly, the value that this "flag" can assume may be a binary number of 1/0, for example, and may be a ternary number or more. That is, the number of bits included in this "flag" may be any number, and may be one bit or multiple bits. In addition, possible forms of inclusion of identification information (including flags also) in a bitstream include not only the one in which the identification information is included in the bitstream, but also the one in which difference information of the identification information relative to reference information is included in the bitstream. Accordingly, in the present specification, a "flag" or "identification information" covers not only the information, but also difference information relative to reference information.

In addition, various types of information (metadata, etc.) related to encoded data (bitstream) may be transmitted or recorded in any form as long as they are associated with the encoded data. Here, the term "associate" means that, for example, when one associated piece of data is processed, the other associated piece of data may be used (may be linked). That is, the mutually associated pieces of data may be unified into one piece of data, or may each be an individual piece of data. For example, information associated with encoded data (image) may be transmitted on a transmission path different from that for the encoded data (image). In addition, for example, the information associated with the encoded data (image) may be recorded in a recording medium other than (or in another recording area of the same recording medium as) that for the encoded data (image). Note that this "association" may be performed not for the entire data, but for a part of the data. For example, an image and information corresponding to the image may be associated with each other in any unit such as a plurality of frames, one frame, or a portion in a frame.

Note that terms used in the present specification such as "synthesize," "multiplex," "add," "integrate," "include," "store," "push in," "put in," or "insert" mean combining a plurality of objects into one, like combining encoded data and metadata into one piece of data, for example, and mean one method of "association" mentioned above.

In addition, embodiments of the present technology are not limited to the embodiment mentioned above but can be modified in various manners within the scope not deviating from the main parts of the present technology.

For example, a configuration explained as one apparatus (or as one processing section) may be divided and configured as a plurality of apparatuses (or as a plurality of processing sections). Conversely, a configuration explained as a plurality of apparatuses (or as a plurality of processing sections) above may be collectively configured as one apparatus (or as one processing section). In addition, the configuration of each apparatus (or each processing section) may certainly have an additional configuration other than those mentioned above. Furthermore, as long as the configuration and operation as the entire system are substantially the same, a part of the configuration of an apparatus (or a processing section) may be included in the configuration of another apparatus (or another processing section).

In addition, for example, the program mentioned above may be executed at any apparatus. In that case, it is only required that the apparatus has necessary functions (functional blocks, etc.) and can obtain necessary information.

In addition, for example, each step in one flowchart may be executed by one apparatus, or may be executed by plural apparatuses in a sharing manner. Furthermore, in a case that one step includes a plurality of processes, the plurality of processes may be executed by one apparatus, or may be executed by plural apparatuses in a sharing manner. In other words, the plurality of processes included in the one step can also be executed as processes at a plurality of steps. Conversely, processes explained as a plurality of steps can also be executed collectively as one step.

In addition, for example, the program executed by a computer may be configured such that processes in steps describing the program are executed in a temporal sequence in the order explained in the present specification, or executed in parallel or executed individually at required timings such as those when the processes are called. That is, unless contradictions arise, the process at each step may be executed in an order different from the order mentioned above. Furthermore, the processes of the steps describing the program may be executed in parallel with processes of other programs, and/or may be executed in combination with processes of other programs.

In addition, for example, plural technologies related to the present technology can be implemented singly independently from each other, unless contradictions arise. Certainly, some of the plural present technologies can also be implemented in combination. For example, a part or the whole of the present technology explained in any of the embodiments can also be implemented in combination with a part or the whole of the present technology explained in another one of the embodiments. In addition, a part or the whole of any part of the present technology mentioned above can also be implemented in combination with another technology not mentioned above.

Note that the present technology can also have configurations like the ones mentioned below.
(1) An image processing apparatus including:
   a map generating section that generates a plurality of maps indicating whether or not there is data at each position on one frame image having arranged a patch that is an image obtained by projecting 3D data representing a three-dimensional structure onto a two-dimensional plane; and
   a bitstream generating section that generates a bitstream including encoded data of the frame image and encoded data of a plurality of the maps generated by the map generating section.
(2) The image processing apparatus according to (1), in which
   the map generating section generates a plurality of the maps having mutually different levels of precision in terms of whether or not there is data.
(3) The image processing apparatus according to (2), in which
   positions regarding which a plurality of the maps indicates whether or not there is data are mutually different.
(4) The image processing apparatus according to (2), in which
   positions regarding which a plurality of the maps indicates whether or not there is data include not only mutually different positions, but also the same positions.
(5) The image processing apparatus according to (2), in which
   the map generating section combines a plurality of the maps into one piece of data.
(6) The image processing apparatus according to (5), in which
   the map generating section generates the data including information related to precision of the maps in terms of whether or not there is data.
(7) The image processing apparatus according to (6), in which
   the information related to the precision includes information indicating the number of the levels of precision and information indicating a value of each level of precision.
(8) An image processing method including:
   generating a plurality of maps indicating whether or not there is data at each position on one frame image having arranged a patch that is an image obtained by projecting 3D data representing a three-dimensional structure onto a two-dimensional plane; and
   generating a bitstream including encoded data of the frame image and encoded data of a plurality of the generated maps.
(9) An image processing apparatus including:
   a reconstructing section that uses a plurality of maps that corresponds to a frame image having arranged a patch that is an image obtained by projecting 3D data representing a three-dimensional structure onto a two-dimensional plane and indicates whether or not there is data at each position, to reconstruct the 3D data from the patch.
(10) An image processing method including:
   using a plurality of maps that corresponds to a frame image having arranged a patch that is an image obtained by projecting 3D data representing a three-dimensional structure onto a two-dimensional plane and indicates whether or not there is data at each position, to reconstruct the 3D data from the patch.
(11) An image processing apparatus including:
   a map generating section that generates a map that indicates whether or not there is data at each position on a frame image having arranged a patch that is an image obtained by projecting 3D data representing a three-dimensional structure onto a two-dimensional plane and has a plurality of levels of precision set in terms of whether or not there is data; and
   a bitstream generating section that generates a bitstream including encoded data of the frame image and encoded data of the map generated by the map generating section.
(12) The image processing apparatus according to (11), in which
   the map generating section generates the map having the levels of precision that are each set for a block.
(13) The image processing apparatus according to (11), in which
   the map generating section generates the map having the levels of precision that are each set for a patch.
(14) The image processing apparatus according to (11), in which
   the map generating section generates the map indicating whether or not there is data for each sub-block that is among plural sub-blocks formed in each block and has a size corresponding to a corresponding level of precision among the levels of precision.
(15) The image processing apparatus according to (11), in which
   the map generating section sets the levels of precision on the basis of a cost function.
(16) The image processing apparatus according to (11), in which
   the map generating section sets the levels of precision on the basis of a characteristic of a specific region or a setting of a region of interest.
(17) The image processing apparatus according to (11), further including:
   an encoding section that encodes a plurality of the maps generated by the map generating section, in which
   the bitstream generating section generates a bitstream including encoded data of the frame image and encoded data of the maps generated by the encoding section.
(18) An image processing method including:
   generating a map that indicates whether or not there is data at each position on a frame image having arranged a patch that is an image obtained by projecting 3D data representing a three-dimensional structure onto a two-dimensional plane and has a plurality of levels of precision set in terms of whether or not there is data; and
   generating a bitstream including encoded data of the frame image and encoded data of the generated map.
(19) An image processing apparatus including:
   a reconstructing section that uses a map that indicates whether or not there is data at each position on a frame image having arranged a patch that is an image obtained by projecting 3D data representing a three-dimensional structure onto a two-dimensional plane and has a plurality of levels of precision set in terms of whether or not there is data, to reconstruct the 3D data from the patch.
(20) An image processing method including:
   using a map that indicates whether or not there is data at each position on a frame image having arranged a patch that is an image obtained by projecting 3D data representing a three-dimensional structure onto a two-dimensional plane and has a plurality of levels of precision set in terms of whether or not there is data, to reconstruct the 3D data from the patch.

### [Reference Signs List]

100 Encoding apparatus, 111 Patch decomposing section, 112 Packing section, 113 OMap generating section, 114 Auxiliary-patch information compressing section, 115 Video encoding section, 116 Video encoding section, 117 OMap encoding section, 118 Multiplexer, 151 Precision value deciding section, 152 OMap generating section, 200 Decoding apparatus, 211 Demultiplexer, 212 Auxiliary-patch information decoding section, 213 Video decoding section, 214 Video decoding section, 215 OMap decoding section, 216 Unpacking section, 217 3D reconstructing section

## Claims

1. An image processing apparatus comprising:
a map generating section that generates a plurality of maps indicating whether or not there is data at each position on one frame image having arranged a patch that is an image obtained by projecting 3D data representing a three-dimensional structure onto a two-dimensional plane; and
a bitstream generating section that generates a bitstream including encoded data of the frame image and encoded data of a plurality of the maps generated by the map generating section.

2. The image processing apparatus according to claim 1, wherein
the map generating section generates a plurality of the maps having mutually different levels of precision in terms of whether or not there is data.

3. The image processing apparatus according to claim 2, wherein
positions regarding which a plurality of the maps indicates whether or not there is data are mutually different.

4. The image processing apparatus according to claim 2, wherein
positions regarding which a plurality of the maps indicates whether or not there is data include not only mutually different positions, but also same positions.

5. The image processing apparatus according to claim 2, wherein
the map generating section combines a plurality of the maps into one piece of data.

6. The image processing apparatus according to claim 5, wherein
the map generating section generates the data including information related to precision of the maps in terms of whether or not there is data.

7. The image processing apparatus according to claim 6, wherein
the information related to the precision includes information indicating the number of the levels of precision and information indicating a value of each level of precision.

8. An image processing method comprising:
generating a plurality of maps indicating whether or not there is data at each position on one frame image having arranged a patch that is an image obtained by projecting 3D data representing a three-dimensional structure onto a two-dimensional plane; and
generating a bitstream including encoded data of the frame image and encoded data of a plurality of the generated maps.

9. An image processing apparatus comprising:
a reconstructing section that uses a plurality of maps that corresponds to a frame image having arranged a patch that is an image obtained by projecting 3D data representing a three-dimensional structure onto a two-dimensional plane and indicates whether or not there is data at each position, to reconstruct the 3D data from the patch.

10. An image processing method comprising:
using a plurality of maps that corresponds to a frame image having arranged a patch that is an image obtained by projecting 3D data representing a three-dimensional structure onto a two-dimensional plane, and indicates whether or not there is data at each position, to reconstruct the 3D data from the patch.

11. An image processing apparatus comprising:
a map generating section that generates a map that indicates whether or not there is data at each position on a frame image having arranged a patch that is an image obtained by projecting 3D data representing a three-dimensional structure onto a two-dimensional plane and has a plurality of levels of precision set in terms of whether or not there is data; and
a bitstream generating section that generates a bitstream including encoded data of the frame image and encoded data of the map generated by the map generating section.

12. The image processing apparatus according to claim 11, wherein
the map generating section generates the map having the levels of precision that are each set for a block.

13. The image processing apparatus according to claim 11, wherein
the map generating section generates the map having the levels of precision that are each set for a patch.

14. The image processing apparatus according to claim 11, wherein
the map generating section generates the map indicating whether or not there is data for each sub-block that is among plural sub-blocks formed in each block and has a size corresponding to a corresponding level of precision among the levels of precision.

15. The image processing apparatus according to claim 11, wherein
the map generating section sets the levels of precision on a basis of a cost function.

16. The image processing apparatus according to claim 11, wherein
the map generating section sets the levels of precision on a basis of a characteristic of a specific region or a setting of a region of interest.

17. The image processing apparatus according to claim 11, further comprising:
an encoding section that encodes a plurality of the maps generated by the map generating section, wherein
the bitstream generating section generates a bitstream including encoded data of the frame image and encoded data of the maps generated by the encoding section.

18. An image processing method comprising:
generating a map that indicates whether or not there is data at each position on a frame image having arranged a patch that is an image obtained by projecting 3D data representing a three-dimensional structure onto a two-dimensional plane and has a plurality of levels of precision set in terms of whether or not there is data;
and
generating a bitstream including encoded data of the frame image and encoded data of the generated map.

19. An image processing apparatus comprising:
a reconstructing section that uses a map that indicates whether or not there is data at each position on a frame image having arranged a patch that is an image obtained by projecting 3D data representing a three-dimensional structure onto a two-dimensional plane and has a plurality of levels of precision set in terms of whether or not there is data, to reconstruct the 3D data from the patch.

20. An image processing method comprising: using a map that indicates whether or not there is data at each position on a frame image having arranged a patch that is an image obtained by projecting 3D data representing a three-dimensional structure onto a two-dimensional plane and has a plurality of levels of precision set in terms of whether or not there is data, to reconstruct the 3D data from the patch.
